(19) Europäisches Patentamt / European Patent Office / Office européen des brevets

(11) **EP 4 012 113 B1**

(12) **EUROPEAN PATENT SPECIFICATION**

(45) Date of publication and mention
of the grant of the patent:
**04.03.2026 Bulletin 2026/10**

(21) Application number: **21779716.6**

(22) Date of filing: **18.03.2021**

(51) International Patent Classification (IPC):
*E02F 9/22* (2006.01)     *F15B 11/024* (2006.01)
*F15B 11/042* (2006.01)     *F15B 11/08* (2006.01)
*E02F 3/43* (2006.01)

(52) Cooperative Patent Classification (CPC):
**E02F 9/2296; E02F 9/2217; E02F 9/2235;**
**E02F 9/2282; E02F 9/2292; F15B 11/024;**
E02F 3/437; F15B 13/0403; F15B 21/087;
F15B 2211/20546; F15B 2211/20576;
F15B 2211/3058; F15B 2211/3116;
F15B 2211/3133; F15B 2211/3144;     (Cont.)

(86) International application number:
**PCT/JP2021/011253**

(87) International publication number:
**WO 2021/200244 (07.10.2021 Gazette 2021/40)**

(54) **WORK MACHINE**

ARBEITSMASCHINE

MACHINE DE TRAVAIL

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **30.03.2020 JP 2020060813**

(43) Date of publication of application:
**15.06.2022 Bulletin 2022/24**

(73) Proprietor: **Hitachi Construction Machinery Co.,**
**Ltd.**
**Tokyo 110-0015 (JP)**

(72) Inventors:
• **KUMAGAI, Kento**
  **Ibaraki 300-0013 (JP)**
• **IMURA, Shinya**
  **Ibaraki 300-0013 (JP)**
• **TSURUGA, Yasutaka**
  **Ibaraki 300-0013 (JP)**
• **CHIBA, Takaaki**
  **Ibaraki 300-0013 (JP)**
• **AMANO, Hiroaki**
  **Ibaraki 300-0013 (JP)**
• **NISHIKAWA, Shinji**
  **Ibaraki 300-0013 (JP)**
• **NARAZAKI, Akihiro**
  **Ibaraki 300-0013 (JP)**
• **SUGIYAMA, Genroku**
  **Ibaraki 300-0013 (JP)**
• **YAMAMOTO, Shinjiro**
  **Ibaraki 300-0013 (JP)**

(74) Representative: **Manitz Finsterwald**
**Patent- und Rechtsanwaltspartnerschaft mbB**
**Martin-Greif-Straße 1**
**80336 München (DE)**

(56) References cited:
WO-A1-2017/110167     WO-A1-2019/220872
JP-A- 2014 074 433     JP-A- 2016 075 302
JP-A- H07 158 604     JP-A- H08 219 121
US-A1- 2002 108 486     US-A1- 2017 016 460
US-A1- 2019 323 527     US-A1- 2020 040 547

(52) Cooperative Patent Classification (CPC): (Cont.)
F15B 2211/31558; F15B 2211/327; F15B 2211/329;
F15B 2211/351; F15B 2211/41509; F15B 2211/426;
F15B 2211/428; F15B 2211/455; F15B 2211/6309;
F15B 2211/6313; F15B 2211/6336;
F15B 2211/6346; F15B 2211/665; F15B 2211/6652;
F15B 2211/6654; F15B 2211/7053; F15B 2211/7135

## Description

Technical Field

The present invention relates to a work machine such as a hydraulic excavator.

Background Art

A work machine such as a hydraulic excavator includes a machine body having a swing structure and a work device (front implement) mounted on the swing structure. The work device includes a boom (front member) connected to the swing structure, an arm (front member) connected to a distal end of the boom, a bucket (front member) connected to a distal end of the arm, a boom cylinder (actuator) that drives the boom, an arm cylinder (actuator) that drives the arm, and a bucket cylinder (actuator) that drives the bucket. In such a work machine as described above, when the boom, the arm, or the bucket is moved alone, a distal end of the bucket moves along a trajectory on an arc. Therefore, for example, when the arm is pulled to form a linear finished face at the distal end of the bucket, an operator needs to operate the boom, the arm, and the bucket in a complex way. Thus, the operator is required to have a skilled operation technique.

Thus, there is available a technology in which a function (machine control) for controlling driving of a hydraulic actuator automatically or semiautomatically by a control device (controller) is applied to an excavation work to move the distal end of the bucket along a designed face (target excavation face) during an excavation operation (when the arm or the bucket is operating) (Patent Document 1) .

Meanwhile, there are some conventional hydraulic excavators each including a hydraulic fluid regeneration device that can increase an operation speed of a hydraulic actuator by merging a hydraulic fluid of a tank-side flow passage of the hydraulic actuator into a pump-side flow passage thereof (hydraulic fluid regeneration) (Patent Document 2).

In such a circumstance as described above, if the machine control is applied to a hydraulic excavator that includes such a hydraulic fluid regeneration device that can increase an expansion and contraction speed of the arm cylinder, when the hydraulic fluid regeneration is performed by the arm cylinder while the distal end of the bucket is moved along a target excavation face by the machine control, there is a possibility that the operation speed of the arm may fluctuate, causing the distal end of the bucket to dig into the ground more deeply than the target excavation face. In other words, in such a configuration that a return hydraulic fluid of the actuator is merged into the pump-side flow passage, when a target flow rate for the actuator is set according to the machine control (or according to a lever operation of an operator) and control is then executed such that a flow rate of a hydraulic fluid to be supplied from a pump to the actuator coincides with the target flow rate, the flow rate of the hydraulic fluid supplied to the actuator may become higher than the target flow rate, and thus, the position control accuracy of the actuator cannot be secured.

In order to solve such a problem as described above, there is available a technology which secures the position control accuracy of an actuator by machine control in a hydraulic excavator that includes a hydraulic fluid regeneration device that can increase the expansion and contraction speed of a cylinder (Patent Document 3). In the technology, when the hydraulic excavator operates by the machine control, in a condition in which the influence of the hydraulic fluid regeneration is significant, a regeneration flow rate is decreased to restrict the hydraulic fluid regeneration function.

Prior Art Document

Patent Documents

Patent Document 1: JP-3056254-B
Patent Document 2: JP-3594680-B
Patent Document 3: JP-2018-003516-A
US 2019/323527 A1 discloses a hydraulic system comprising a recycle line that connects a rod-side supply line to a head-side supply line and provided with a recycle valve and a switching valve, and a release line with a release valve that branches off from the recycle line at a position between the recycle valve and the switching valve, and connects to a tank. The valves are operated in certain manner.
US 2002/108486 A1 discloses a hydraulic recovery system comprising recovery valve means for supplying at least a part of hydraulic fluid amongst hydraulic lines, two variable throttles and throttle valve means. A controller controls said variable throttles in certain manner.
US 2020/040547 A1 discloses a work machine with a hydraulic system including a regenerating circuit and a regeneration control calculation section that controls a regeneration control device to cause the regenerating circuit to perform regeneration based on posture information of a first front part.

US 2017/016460 A1 discloses a regeneration control device having a variable arm regeneration valve disposed on a passage between an arm cylinder and a working fluid tank, and an electronic proportional valve disposed on a passage between the pilot pump and the arm regeneration valve.

JP H08 219121 A discloses a hydraulic pressure reproducing device comprising a reproduction switching valve, a reproducing line with a check valve and a flow rate control valve operated in certain manner.

WO 2017/110167 A1 discloses a work machine with a recycle circuit, a discharge circuit, a recycle amount adjusting apparatus, a controller that controls the recycle amount adjusting apparatus; a first operation amount detector that detects an operation amount of a first operation apparatus; and a first hydraulic actuator speed calculation unit, wherein the controller controls the recycle amount adjusting apparatus on the basis of the detected operation amount and the calculated speed.

WO 2019/220872 A1 discloses a hydraulic drive device comprising boom and arm flow rate control valves, a regeneration control valve, a pump control device, a boom flow rate control device and a regeneration control device. The boom flow rate control device adjusts the boom flow rate so that an operation attachment moves along a target trajectory in an automatic control mode. The regeneration control device puts the regeneration control valve in a regeneration position during low load periods, and in a regeneration cut position in high load periods, and reduces the regeneration rate during low load periods when the boom flow rate control device is switched to an automatic control mode.

JP 2016 075302 A discloses a hydraulic drive system of a work machine that includes a regeneration passage, regeneration flow rate adjustment means, discharge flow rate adjustment means, electric drive means for simultaneously controlling the regeneration flow rate adjustment means and the discharge flow rate adjustment means, and a control device outputting a control command to the electric drive means 22 so that a drop speed of a first driven body is not largely changed regardless of the amount of regeneration flow rate by the regeneration flow rate adjustment means.

JP 2014 074433 A discloses a hydraulic circuit for the construction machine including a regenerative circuit and control means for controlling a hydraulic pump and the regenerative circuit based on a pressure difference across the regeneration valve.

JP HO7 158604 A discloses a hydraulic control device for a construction machine in which, when a pump pressure exceeds a first specified value, regeneration is cancelled. A motor control device is so controlled that its rotational speed command is increased for increasing a pump discharge flow rate.

Problem to be Solved by the Invention

However, when the regeneration function is restricted at the time that the work machine disclosed in Patent Document 3 operates by the machine control, although the position control accuracy of the actuator can be secured, the operation speed of the actuator cannot be increased, possibly resulting in the deteriorated work efficiency. In other words, in such a configuration as to secure the position control accuracy of the actuator by setting a target flow rate for the actuator according to the machine control (or according to a lever operation of an operator) and making a flow rate of a hydraulic fluid to be supplied from the pump to the actuator coincide with the target flow rate, the operation speed of the actuator cannot be increased by merging a return hydraulic fluid of the actuator into the pump-side flow passage.

Summary of the Invention

The present invention has been made in view of the problem described above, and it is an object of the present invention to provide a work machine that can increase an operation speed of an actuator by a regeneration function while securing the position control accuracy of the actuator.

Means for Solving the Problem

The above object is accomplished with the features of claim 1. A work machine has the features of claim 1. It includes a machine body, a work device mounted on the machine body, an actuator that drives the machine body or the work device, a hydraulic working fluid tank, a hydraulic pump that sucks a hydraulic working fluid from the hydraulic working fluid tank and supplies the hydraulic working fluid to the actuator, a flow rate control valve that is connected in parallel to a delivery line of the hydraulic pump and controls a flow of a hydraulic fluid to be supplied from the hydraulic pump to the actuator, an operation lever that gives an instruction for an operation of the actuator, and a controller that controls the flow rate control valve according to an input amount of the operation lever. The work machine includes a regeneration valve that allows a hydraulic working fluid to flow from the meter-out side to the meter-in side of the flow rate control valve, and a selector valve that is provided on a tank line connecting the flow rate control valve and the hydraulic working fluid tank to each other and opens or interrupts the tank line. The controller is configured to calculate a target actuator flow rate that is a target flow rate for the actuator, on the basis of the input amount of the operation lever, calculate a regeneration flow rate that is a flow rate of a hydraulic fluid passing through the regeneration valve, on the basis of the input amount of the operation lever and the target actuator flow rate, subtract the regeneration flow rate from the target actuator flow rate to calculate a target actuator supply flow rate, calculate a target flow rate control valve opening amount on the basis of the target actuator flow rate, calculate a target pump flow rate that is equal to or higher than the total target actuator supply flow rate, control the selector valve on the basis of the input amount of the operation lever, control the flow rate control valve according to the target flow rate control valve opening amount, and control the hydraulic pump according to the target pump flow rate.

According to the present invention configured in such a manner as described above, the flow rate control valve and the hydraulic pump are controlled such that the total of the target flow rate of a hydraulic fluid to be supplied from the hydraulic pump to the actuator (target actuator supply flow rate) and the regeneration flow rate in the actuator becomes equal to the target flow rate for the actuator (target actuator flow rate). Consequently, the operation speed of the actuator can be increased by the regeneration function while the position control accuracy of the actuator is secured.

Advantages of the Invention

With the work machine according to the present invention, the operation speed of the actuator can be increased by the regeneration function while the position control accuracy of the actuator is secured.

Brief Description of the Drawings

FIG. 1 is a side elevational view of a hydraulic excavator according to an embodiment of the present invention.
FIG. 2A is a circuit diagram (1/2) of a hydraulic drive system according to a first working example of the present invention.
FIG. 2B is a circuit diagram (2/2) of the hydraulic drive system according to the first working example of the present invention.
FIG. 3 is a functional block diagram of a controller in the first working example of the present invention.
FIG. 4 is a flow chart depicting processing relating to control of a directional control valve by the controller in the first working example of the present invention.
FIG. 5 is a flow chart depicting processing relating to control of an auxiliary flow rate control valve by the controller in the first working example of the present invention.
FIG. 6 is a flow chart depicting processing relating to control of a hydraulic pump by the controller in the first working example of the present invention.
FIG. 7 is a flow chart depicting processing relating to control of a selector valve by the controller in the first working example of the present invention.
FIG. 8A is a circuit diagram (1/2) of a hydraulic drive system according to a second working example of the present invention.
FIG. 8B is a circuit diagram (2/2) of the hydraulic drive system according to the second working example of the present invention.
FIG. 9 is a functional block diagram of a controller in the second working example of the present invention.
FIG. 10 is a flow chart depicting processing relating to control of a directional control valve by the controller in the second working example of the present invention.

Mode for Carrying Out the Invention

In the following, a work machine according to an embodiment of the present invention will be described using a hydraulic excavator as an example with reference to the drawings. It is to be noted that, in the figures, identical members are denoted by the same reference characters, and overlapping description thereof is omitted suitably.

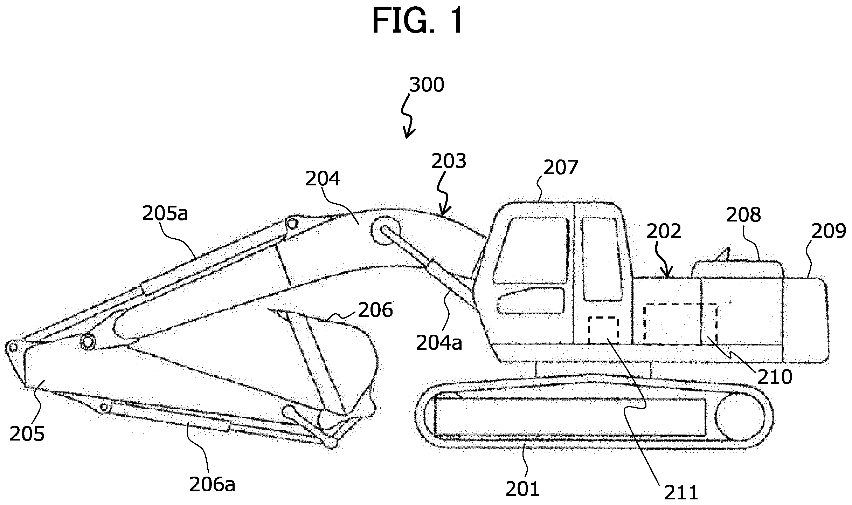

FIG. 1 is a side elevational view of the hydraulic excavator according to the present embodiment.

As depicted in FIG. 1, the hydraulic excavator 300 includes a track structure 201, a swing structure 202 that is rotatably mounted on the track structure 201 and that forms a machine body, and a work device 203 that is mounted pivotably in an upward and downward direction on the swing structure 202 and that performs an excavation work of sediment. The swing structure 202 is driven by a swing motor 211.

The work device 203 includes a boom 204 that is mounted pivotably in the upward and downward direction on the swing structure 202, an arm 205 that is mounted pivotably in the upward and downward direction on a distal end of the boom 204, and a bucket 206 that is mounted pivotably in the upward and downward direction on a distal end of the arm 205.

The boom 204 is driven by a boom cylinder 204a, the arm 205 is driven by an arm cylinder 205a, and the bucket 206 is driven by a bucket cylinder 206a.

An operation room 207 is disposed on a front side of the swing structure 202, and a counterweight 209 for securing the weight balance is disposed on a rear side of the swing structure 202. A machine room 208 in which an engine, a hydraulic pump, and so forth are accommodated is disposed between the operation room 207 and the counterweight 209, and a control valve 210 is installed in the machine room 208. The control valve 210 controls the flow of a hydraulic working fluid from the hydraulic pump to the respective actuators.

A hydraulic drive system that is described below in working examples is incorporated in the hydraulic excavator 300 according to the present embodiment.

[First Working Example]

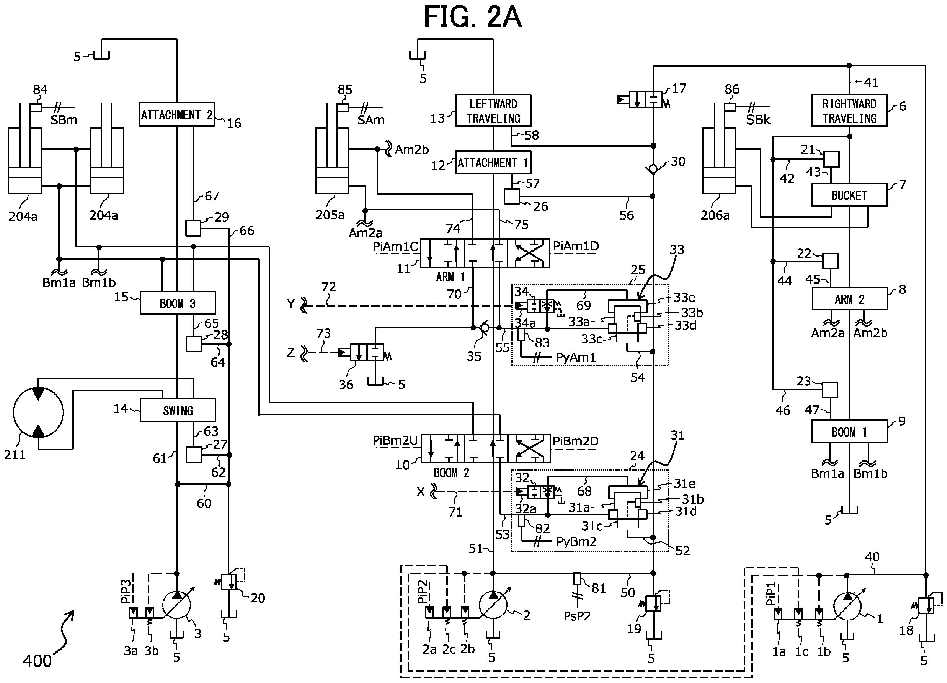

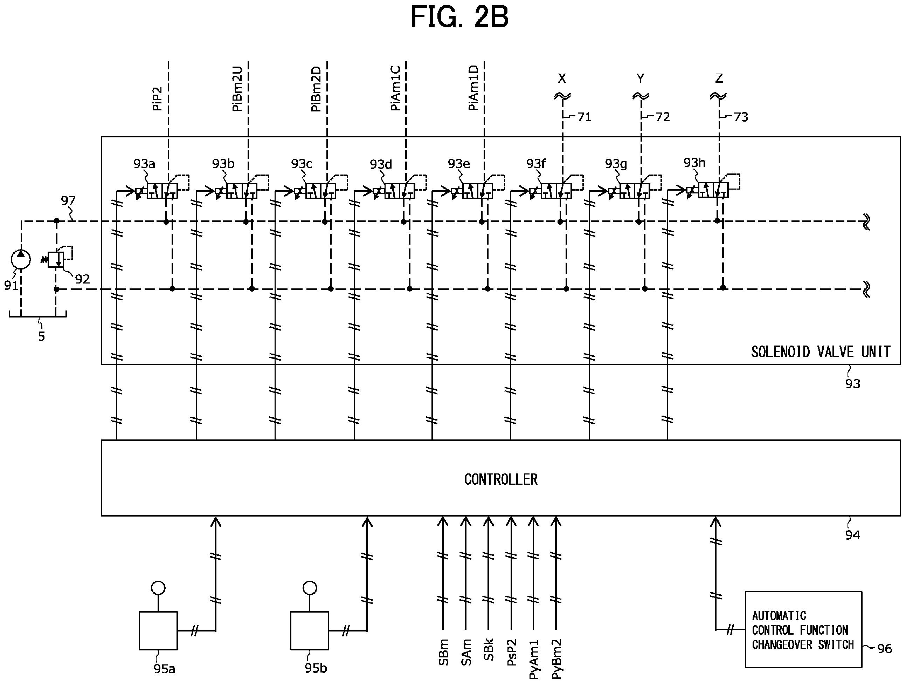

FIGS. 2A and 2B are circuit diagrams of a hydraulic drive system according to a first working example of the present invention.

(1) Configuration

A hydraulic drive system 400 according to the first working example includes three main hydraulic pumps driven by an engine (not depicted). The three main hydraulic pumps are, for example, a first hydraulic pump 1, a second hydraulic pump 2, and a third hydraulic pump 3 that are each include a variable displacement hydraulic pump. The hydraulic drive system 400 also includes a pilot pump 91 driven by the engine and hydraulic working fluid tanks 5 that supply hydraulic fluids to the hydraulic pumps 1 to 3 and the pilot pump 91.

A tilting angle of the first hydraulic pump 1 is controlled by a regulator attached to the first hydraulic pump 1. The regulator of the first hydraulic pump 1 includes a flow rate control command pressure port 1a, a first hydraulic pump self-pressure port 1b, and a second hydraulic pump self-pressure port 1c. A tilting angle of the second hydraulic pump 2 is controlled by a regulator attached to the second hydraulic pump 2. The regulator of the second hydraulic pump 2 includes a flow rate control command pressure port 2a, a second hydraulic pump self-pressure port 2b, and a first hydraulic pump self-pressure port 2c. A tilting angle of the third hydraulic pump 3 is controlled by a regulator attached to the third hydraulic pump 3. The regulator of the third hydraulic pump 3 includes a flow rate control command pressure port 3a and a third hydraulic pump self-pressure port 3b.

A delivery line 40 of the first hydraulic pump 1 is connected to the hydraulic working fluid tank 5 through a center bypass line 41. On the center bypass line 41, a rightward traveling directional control valve 6, a bucket directional control valve 7, a second arm directional control valve 8, and a first boom directional control valve 9 are arranged in order from the upstream side. The rightward traveling directional control valve 6 controls driving of a rightward traveling motor, which is not depicted, of a pair of traveling motors for driving the track structure 201. The bucket directional control valve 7 controls the flow of a hydraulic fluid to be supplied to the bucket cylinder 206a. The second arm directional control valve 8 controls the flow of a hydraulic fluid to be supplied to the arm cylinder 205a. The first boom directional control valve 9 controls the flow of a hydraulic fluid to be supplied to the boom cylinder 204a. The bucket directional control valve 7, the second arm directional control valve 8, and the first boom directional control valve 9 are connected at meter-in ports thereof in parallel to part of the center bypass line 41 which connects the rightward traveling directional control valve 6 and the bucket directional control valve 7 to each other, through hydraulic lines 42 and 43, hydraulic lines 44 and 45, and hydraulic lines 46 and 47, respectively. Further, the delivery line 40 is connected to the hydraulic working fluid tank 5 via a main relief valve 18 in order to protect the circuit from an excessive pressure rise. On the delivery line 40, a pressure sensor (not depicted) for detecting the pressure of the first hydraulic pump 1 is provided.

A delivery line 50 of the second hydraulic pump 2 is connected to the hydraulic working fluid tank 5 through a center bypass line 51. On the center bypass line 51, a second boom directional control valve 10, a first arm directional control valve 11, a first attachment directional control valve 12, and a leftward traveling directional control valve 13 are arranged in order from the upstream side. The second boom directional control valve 10 controls the flow of a hydraulic fluid to be supplied to the boom cylinder 204a. The first arm directional control valve 11 controls the flow of a hydraulic fluid to be supplied to the arm cylinder 205a. The first attachment directional control valve 12 controls the flow of a hydraulic fluid to be supplied to a first actuator, which is not depicted, for driving a first special attachment such as a crusher that is provided in place of the bucket 206. The leftward traveling directional control valve 13 controls driving of a leftward traveling motor, which is not depicted, of the pair of traveling motors for driving the track structure 201. The second boom directional control valve 10, the first arm directional control valve 11, the first attachment directional control valve 12, and the leftward traveling directional control valve 13 are connected at meter-in ports thereof in parallel to the delivery line 50 of the second hydraulic pump 2 through hydraulic lines 52 and 53, hydraulic lines 54 and 55, hydraulic lines 56 and 57, and a hydraulic line 58, respectively. The hydraulic line 58 is connected to the delivery line 40 of the first hydraulic pump 1 via a merge valve 17. A check valve 30 is provided between the hydraulic line 58 and the delivery line 50 of the second hydraulic pump 2. The check valve 30 prevents a hydraulic fluid which is to be supplied from the first hydraulic pump 1 to the delivery line 50 via the merge valve 17, from flowing into the directional control valves 10 to 12 arranged on the upstream side of the leftward traveling directional control valve 13. Further, the delivery line 50 is connected to the hydraulic working fluid tank 5 via a main relief valve 19 in order to protect the circuit from an excessive pressure rise. A pressure sensor 81 for detecting the pressure of the second hydraulic pump 2 is provided on the delivery line 50.

The first arm directional control valve 11 is connected at a meter-out port thereof to the hydraulic working fluid tank 5 through a tank line 70. A selector valve 36 is arranged on the tank line 70. The selector valve 36 is connected on the upstream side thereof to a hydraulic line 55 via a regeneration valve 35. The regeneration valve 35 allows a hydraulic fluid to flow from the tank line 70 (meter-out port of the directional control valve 11) to the hydraulic line 55 (meter-in port of the directional control valve 11) but prevents the hydraulic fluid from flowing in the reverse direction.

A delivery line 60 of the third hydraulic pump 3 is connected to the hydraulic working fluid tank 5 through a center bypass line 61. On the center bypass line 61, a swinging directional control valve 14, a third boom directional control valve 15, and a second attachment directional control valve 16 are arranged in order from the upstream side. The swinging directional control valve 14 controls the flow of a hydraulic fluid to be supplied to the swing motor 211. The third boom directional control valve 15 controls the flow of a hydraulic fluid to be supplied to the boom cylinder 204a. The second attachment directional control valve 16 is used to control, when a second special attachment including a second actuator is mounted in addition to the first special attachment or when a second special attachment including two actuators, that is, the first actuator and the second actuator, is mounted in place of the first special actuator, the flow of a hydraulic fluid to be supplied to the second actuator. The swinging directional control valve 14, the third boom directional control valve 15, and the second attachment directional control valve 16 are connected at meter-in ports thereof in parallel to the delivery line 60 of the third hydraulic pump 3 through hydraulic lines 62 and 63, hydraulic lines 64 and 65, and hydraulic lines 67 and 67, respectively. Further, the delivery line 60 is connected to the hydraulic working fluid tank 5 via a main relief valve 20 in order to protect the circuit from an excessive pressure rise. A pressure sensor (not depicted) for detecting the pressure of the third hydraulic pump 3 is provided on the delivery line 60.

Stroke sensors 84, 85, and 86 for detecting a stroke amount are provided for the boom cylinder 204a, the arm cylinder 205a, and the bucket cylinder 206a, respectively, in order to acquire an operation state of the hydraulic excavator 300. It is to be noted that various elements such as a tilt sensor, a rotation angle sensor, and an IMU can be used as means for acquiring an operation state of the hydraulic excavator 300, and the means mentioned is not limited to the stroke sensors described above.

An auxiliary flow rate control valve 21 is provided on the hydraulic lines 42 and 43 connected to the bucket directional control valve 7, an auxiliary flow rate control valve 22 is provided on the hydraulic lines 44 and 45 connected to the second arm directional control valve 8, and an auxiliary flow rate control valve 23 is provided on the hydraulic lines 46 and 47 connected to the first boom directional control valve 9. The auxiliary flow rate control valves 21, 22, and 23 restrict the flow rate of a hydraulic fluid to be supplied from the first hydraulic pump 1 to the directional control valves 7 to 8 upon a combined operation. An auxiliary flow rate control valve 24 is provided on the hydraulic lines 52 and 53 connected to the meter-in port of the second boom directional control valve 10, an auxiliary flow rate control valve 25 is provided on the hydraulic lines 54 and 55 connected to the meter-in port of the first arm directional control valve 11, and an auxiliary flow rate control valve 26 is provided on the hydraulic lines 56 and 57 connected to the meter-in port of the first attachment directional control valve 12. The auxiliary flow rate control valves 24, 25, and 26 restrict the flow rate of a hydraulic fluid to be supplied from the second hydraulic pump 2 to the directional control valves 10 to 12 upon a combined operation. An auxiliary flow rate control valve 27 is provided on the hydraulic lines 62 and 63 connected to the meter-in port of the swinging directional control valve 14, an auxiliary flow rate control valve 28 is provided on the hydraulic lines 64 and 65 connected to the meter-in port of the third boom directional control valve 15, and an auxiliary flow rate control valve 29 is provided on the hydraulic lines 66 and 67 connected to the meter-in port of the second attachment directional control valve 16. The auxiliary flow rate control valves 27, 28, and 29 restrict the flow rate of a hydraulic fluid to be supplied from the third hydraulic pump 3 to the directional control valves 14 to 16 upon a combined operation.

A delivery port of the pilot pump 91 is connected to the hydraulic working fluid tank 5 via a pilot relief valve 92 used for generating pilot primary pressure and is also connected to one input port of each of solenoid proportional valves 93a to 93h built in a solenoid valve unit 93, through a hydraulic line 97. The other input port of each of the solenoid proportional valves 93a to 93h is connected to the hydraulic working fluid tank 5. Each of the solenoid proportional valves 93a to 93h decompresses the pilot primary pressure according to a command signal from a controller 94 to generate pilot command pressure.

An output port of the solenoid proportional valve 93a is connected to the flow rate control command pressure port 2a of the regulator for the second hydraulic pump 2. Output ports of the solenoid proportional valves 93b and 93c are connected to pilot ports of the second boom directional control valve 10. Output ports of the solenoid proportional valves 93d and 93e are connected to pilot ports of the first arm directional control valve 11. An output port of the solenoid proportional valve 93f is connected to a pilot port of the auxiliary flow rate control valve 24 (pilot port 32a of pilot variable restrictor 32) through a hydraulic line 71. An output port of the solenoid proportional valve 93g is connected to a pilot port of the auxiliary flow rate control valve 25 (pilot port 34a of pilot variable restrictor 34) through a hydraulic line 72. An output port of the solenoid proportional valve 93h is connected to a pilot port of the selector valve 36 through a hydraulic line 73.

It is to be noted that, in order to simplify the description, the following solenoid proportional valves are not illustrated in the figures: solenoid proportional valves for the flow rate control command pressure ports 1a and 3a of the regulators for the first hydraulic pump 1 and the third hydraulic pump 3, a solenoid proportional valve for the rightward traveling directional control valve 6, a solenoid proportional valve for the bucket directional control valve 7, a solenoid proportional valve for the second arm directional control valve 8, a solenoid proportional valve for the first boom directional control valve 9, a solenoid proportional valve for the first attachment directional control valve 12, a solenoid proportional valve for the leftward traveling directional control valve 13, a solenoid proportional valve for the swinging directional control valve 14, a solenoid proportional valve for the third boom directional control valve 15, a solenoid proportional valve for the second attachment directional control valve 16, and solenoid proportional valves for the auxiliary flow rate control valves 21 to 23 and 26 to 29.

The auxiliary flow rate control valve 24 includes a main valve 31 in the form of a sheet that forms an auxiliary variable restrictor, a control variable restrictor 31b that is provided on a valve body 31a of the main valve 31 and that changes the opening amount according to the amount of movement of the valve body 31a, and the pilot variable restrictor 32. A housing in which the main valve 31 is built has a first pressure chamber 31c formed at a connection portion between the main valve 31 and a hydraulic line 52, a second pressure chamber 31d formed at a connection portion between the main valve 31 and the hydraulic line 53, and a third pressure chamber 31e formed so as to communicate with the first pressure chamber 31c via the control variable restrictor 31b. The pilot variable restrictor 32 is arranged on a hydraulic line 68 that connects the third pressure chamber 31e and the hydraulic line 53 to each other. The pilot port 32a of the pilot variable restrictor 32 is connected to the output port of the solenoid proportional valve 93f. A pressure sensor 82 is provided on the hydraulic line 53 that connects the second boom directional control valve 10 and the auxiliary flow rate control valve 24 (main valve 31) to each other. It is to be noted that, although illustration is omitted partly in order to simplify the description, the auxiliary flow rate control valves 21 to 29 and their associated components, pipes, and wirings are all configured similarly.

The hydraulic drive system 400 includes a boom operation lever 95a that can switch between the first boom directional control valve 9, the second boom directional control valve 10, and the third boom directional control valve 15, and an arm operation lever 95b that can switch between the first arm directional control valve 11 and the second arm directional control valve 8. It is to be noted that, in order to simplify the description, the following operation levers are not illustrated in the figures: a rightward traveling operation lever for switching to and operating the rightward traveling directional control valve 6, a bucket operation lever for switching to and operating the bucket directional control valve 7, a first attachment operation lever for switching to and operating the first attachment directional control valve 12, a leftward traveling operation lever for switching to and operating the leftward traveling directional control valve 13, a swinging operation lever for switching to and operating the swinging directional control valve 14, and a second attachment operation lever for switching to and operating the second attachment directional control valve 16.

The hydraulic drive system 400 includes the controller 94. The controller 94 receives, as input, input amounts of the operation levers 95a and 95b, output values of the pressure sensors 81 to 83, and output values of the stroke sensors 84 to 86. Further, the controller 94 outputs command signals to the solenoid proportional valves 93a to 93h (including the solenoid proportional valves not depicted) of the solenoid valve unit 93.

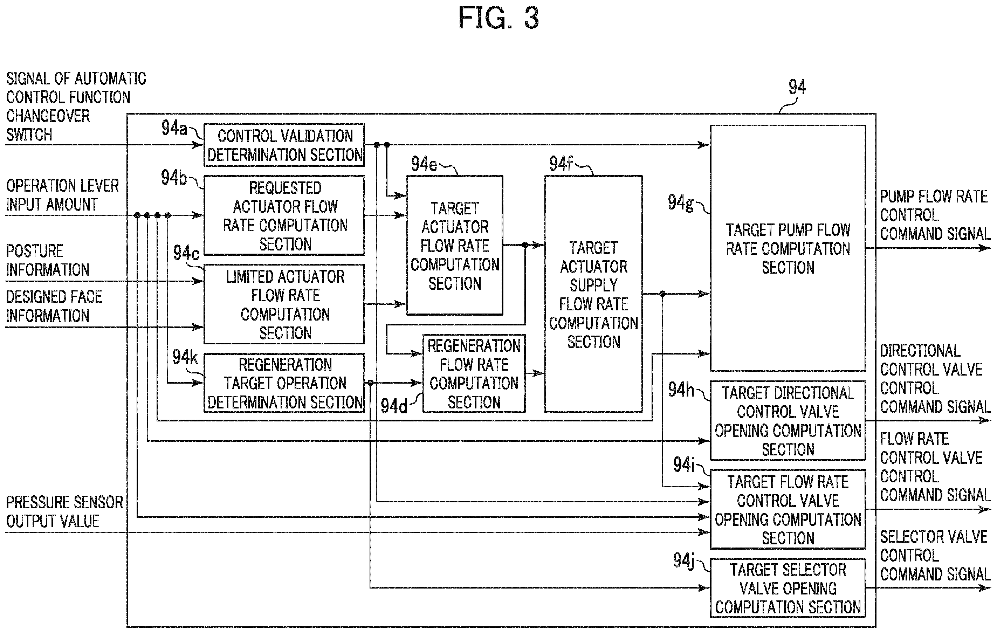

FIG. 3 is a functional block diagram of the controller 94. Referring to FIG. 3, the controller 94 includes a control validation determination section 94a, a requested actuator flow rate computation section 94b, a limited actuator flow rate computation section 94c, a regeneration target operation determination section 94k, a target actuator flow rate computation section 94e, a regeneration flow rate computation section 94d, a target actuator supply flow rate computation section 94f, a target pump flow rate computation section 94g, a target directional control valve opening computation section 94h, a target flow rate control valve opening computation section 94i, and a target selector valve opening computation section 94j.

The control validation determination section 94a determines, on the basis of a signal from an automatic control function changeover switch 96, whether or not an automatic control function is valid. The requested actuator flow rate computation section 94b calculates a demanded flow rate for the actuators on the basis of an operation lever input amount. On the basis of posture information of the machine body 202 or the work device 203 obtained from signals of the stroke sensors 84 to 86 and so forth and designed face information set in advance (including a registered target trajectory of the actuators and so forth), the limited actuator flow rate computation section 94c calculates, as a limited flow rate, an actuator flow rate for controlling the machine body 202 or the work device 203 such that the machine body 202 or the work device 203 does not deviate from a set restricted area. The regeneration target operation determination section 94k determines, on the basis of input amounts of the operation levers 95a and 95b, whether or not the operation of an actuator is the operation to which the regeneration function can be applied (regeneration target operation).

The target actuator flow rate computation section 94e calculates a target flow rate of a hydraulic fluid to be supplied to the actuators (target actuator flow rate), on the basis of a result of the determination from the control validation determination section 94a, a demanded flow rate for the actuator from the requested actuator flow rate computation section 94b, and a limited flow rate for the actuator from the limited actuator flow rate computation section 94c. The regeneration flow rate computation section 94d calculates a flow rate of a hydraulic fluid passing through the regeneration valve 35 (regeneration flow rate), on the basis of a target actuator flow rate from the target actuator flow rate computation section 94e and a result of the determination from the regeneration target operation determination section 94k. The target actuator supply flow rate computation section 94f calculates a target flow rate of a hydraulic fluid to be supplied from the hydraulic pump to the actuator (target actuator supply flow rate), on the basis of a target actuator flow rate from the target actuator flow rate computation section 94e and a regeneration flow rate from the regeneration flow rate computation section 94d.

The target pump flow rate computation section 94g calculates a target flow rate for the hydraulic pumps 1 to 3 (target pump flow rate) on the basis of a result of the determination from the control validation determination section 94a, a target actuator supply flow rate from the target actuator supply flow rate computation section 94f, and an operation lever input amount, and outputs a command signal (pump flow rate control command signal) according to the target pump flow rate. The target directional control valve opening computation section 94h calculates a target opening amount for the directional control valves 6 to 16 on the basis of an input amount of the operation levers 95a and 95b, and outputs a command signal (directional control valve control command signal) according to the target opening amount. The target flow rate control valve opening computation section 94i calculates a target opening amount for the auxiliary flow rate control valves 21 to 29 on the basis of a result of the determination from the control validation determination section 94a, a target actuator supply flow rate from the target actuator supply flow rate computation section 94f, an operation lever input amount, and a pressure sensor output value, and outputs a command signal (flow rate control valve control command signal) according to the target opening amount. The target selector valve opening computation section 94j calculates a target opening amount for the selector valve 36 on the basis of a result of the determination from the regeneration target operation determination section 94k, and outputs a command signal (selector valve control command signal) according to the target opening amount.

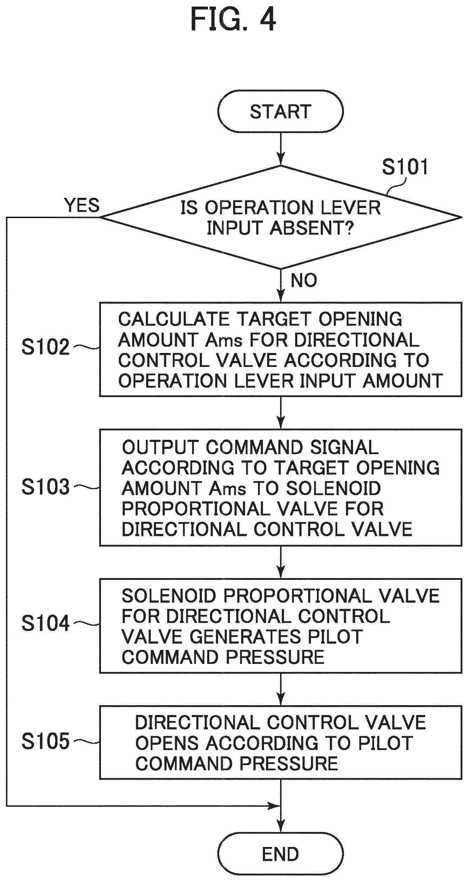

FIG. 4 is a flow chart depicting processing relating to control of the directional control valves 6 to 16 by the controller 94. In the following, only processing relating to the first arm directional control valve 11 is described. Since processing relating to the other directional control valves is similar to the processing relating to the first arm directional control valve 11, redundant description is omitted.

The controller 94 first determines whether or not an input of the arm operation lever 95b is absent (step S101). When it is determined in step S101 that an input of the arm operation lever 95b is absent (YES), the controller 94 ends the processing. When it is determined in step S101 that an input of the arm operation lever 95b is present (NO), the target directional control valve opening computation section 94h of the controller 94 calculates a target opening amount Ams for the directional control valve 11 according to the input amount of the arm operation lever 95b (step S102).

After step S102, the controller 94 outputs a command signal according to the target opening amount Ams to the solenoid proportional valves 93d and 93e for the directional control valve 10 (S103), causes the solenoid proportional valves 93d and 93e to generate pilot command pressure for the directional control valve 11 (S104), and causes the directional control valve 10 to open according to the pilot command pressure (S105). Then, the controller 94 ends the processing.

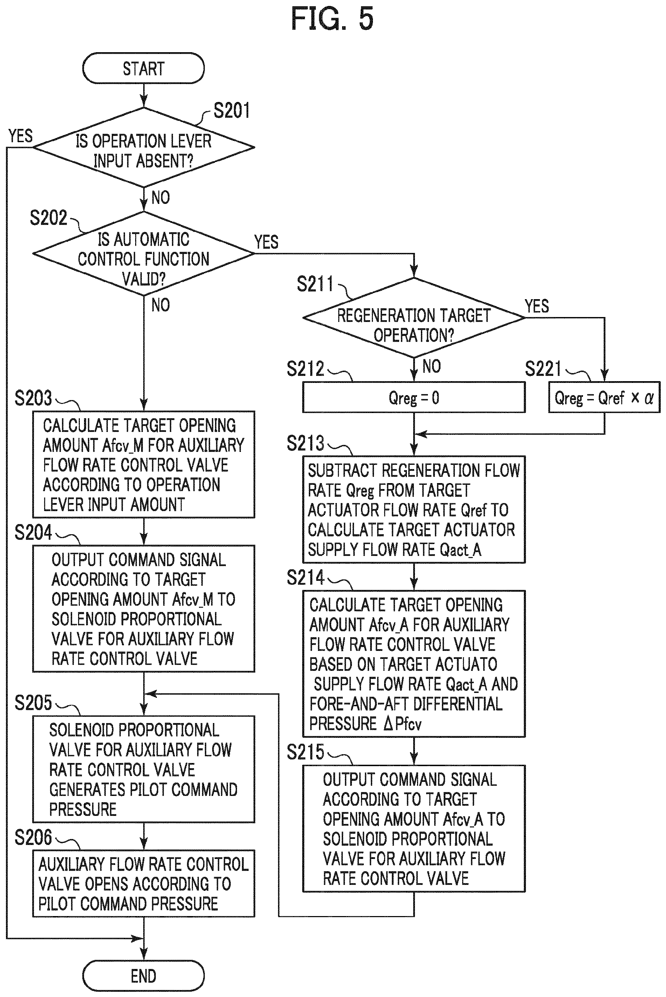

FIG. 5 is a flow chart depicting processing relating to control of the auxiliary flow rate control valves 21 to 29 by the controller 94. In the following, only processing relating to control of the auxiliary flow rate control valve 25 corresponding to the first arm directional control valve 11 is described. Since processing relating to control of the other auxiliary flow rate control valves is similar to the processing relating to the control of the auxiliary flow rate control valve 25, redundant description is omitted.

The controller 94 first determines whether or not an input of the arm operation lever 95b is absent (step S201). When it is determined in step S201 that an input of the arm operation lever 95b is absent (YES), the controller 94 ends the processing. When it is determined in step S201 that an input of the arm operation lever 95b is present (NO), the controller 94 determines whether or not the automatic control function (machine control) is valid (step S202).

When it is determined in step S202 that the automatic control function is invalid (NO), the target flow rate control valve opening computation section 94i of the controller 94 calculates a target opening amount Afcv_M for the auxiliary flow rate control valve 25 (main valve 33) according to the input amount of the arm operation lever 95b (step S203), outputs a command signal according to the target opening amount Afcv_M to the solenoid proportional valve 93g for the auxiliary flow rate control valve 25 (S204), causes the solenoid proportional valve 93g to generate pilot command pressure for the auxiliary flow rate control valve 25 (main valve 33) (S205), and causes the auxiliary flow rate control valve 25 (main valve 33) to open according to the pilot command pressure (S206). Then, the controller 94 ends the processing.

When it is determined in step S202 that the automatic control function is valid (YES), the regeneration target operation determination section 94k of the controller 94 determines, on the basis of the input amount of the arm operation lever 95b, whether or not the operation of the arm cylinder 205a is the regeneration target operation (step S211). In the present working example, when the arm operation lever 95b is operated in the arm crowding direction, the regeneration target operation determination section 94k determines that the operation of the arm cylinder 205a is the regeneration target operation (YES), but when the arm operation lever 95b is operated in the arm dumping direction, the regeneration target operation determination section 94k determines that the operation of the arm cylinder 205a is not the regeneration target operation (NO).

When it is determined in step S211 that the operation of the arm cylinder 205a is not the regeneration object operation (NO), the regeneration flow rate computation section 94d of the controller 94 sets a regeneration flow rate Qreg to zero (step S212), but when it is determined that the operation of the arm cylinder 205a is the regeneration object operation (YES), the regeneration flow rate computation section 94d multiplies the regeneration flow rate Qreg by a meter-in meter-out flow rate $\alpha$ to calculate the regeneration flow rate Qreg (step S221). Here, the meter-in meter-out flow rate $\alpha$ is a ratio of a meter-out flow rate Qact_MO to a meter-in flow rate Qact_MI and is defined by the following expression.

(Expression 1)

$$\alpha = Qact\_MO/Qact\_MI \quad \dots (1)$$

It is to be noted that the meter-in meter-out flow rate $\alpha$ need not necessarily be calculated on the basis of the flow rate but may be calculated, for example, on the basis of a pressure receiving areas on the bottom side and the rod side of the hydraulic cylinder piston.

After step S212 or step S221, the target actuator supply flow rate computation section 94f of the controller 94 subtracts the regeneration flow rate Qreg from a target actuator flow rate Qref to calculate a target actuator supply flow rate Qact_A (step S213), and the target flow rate control valve opening computation section 94i of the controller 94 calculates a target opening amount Afcv_A for the auxiliary flow rate control valve 24 on the basis of the target actuator supply flow rate Qact_A and a fore-and-aft differential pressure ΔPfcv across the auxiliary flow rate control valve 24 (main valve 31) (step S214), and outputs a command signal according to the target opening amount Afcv_A to the solenoid proportional valve 93f for the auxiliary flow rate control valve 24 (step S215). Then, after the controller 94 executes the processing in steps S205 and S206, it ends the processing.

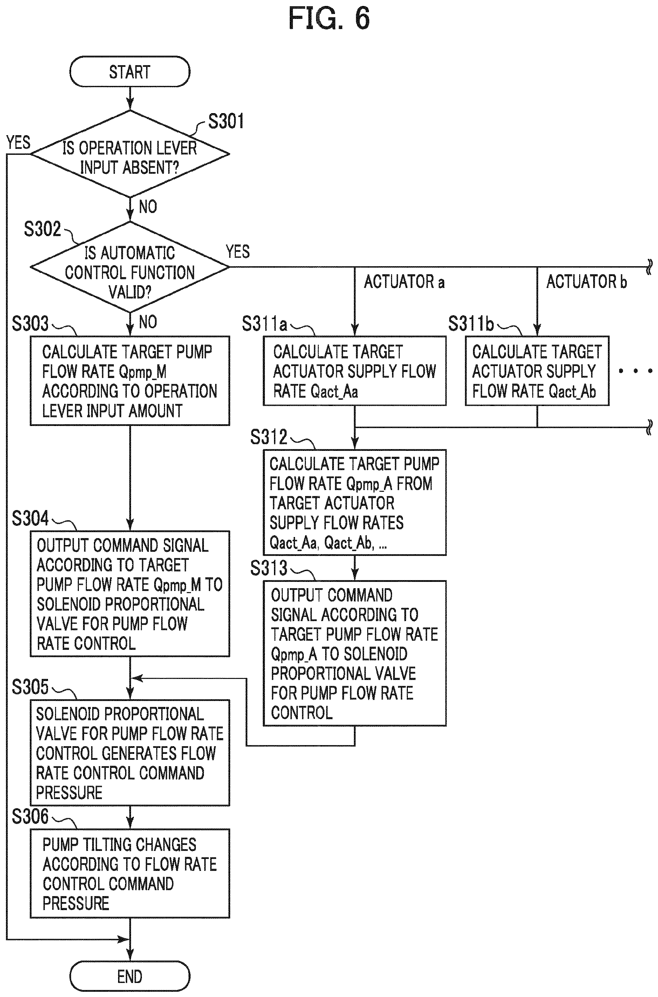

FIG. 6 is a flow chart depicting processing relating to control of the hydraulic pumps 1 to 3 by the controller 94. In the following, only processing relating to control of the second hydraulic pump 2 is described. Since processing relating to control of the other hydraulic pumps is similar to the processing relating to the control of the second hydraulic pump 2, redundant description is omitted.

The controller 94 first determines whether or not an input of the operation levers 95a and 95b is absent (step S301). When the controller 94 determines in step S301 that an input of the operation levers 95a and 95b is absent (YES), it ends the processing. When it is determined in step S301 that an input of the operation levers 95a and 95b is present (NO), the controller 94 determines whether or not the automatic control function is valid (step S302).

When it is determined in step S302 that the automatic control function is invalid (NO), the target pump flow rate computation section 94g of the controller 94 calculates a target pump flow rate Qpmp_M for the second hydraulic pump 2 according to the input amount of the operation levers 95a and 95b (step S303), outputs a command signal according to the target pump flow rate Qpmp_M to the solenoid proportional valve 93a for the flow rate control of the second hydraulic pump 2 (S304), causes the solenoid proportional valve 93a to generate flow rate control command pressure PiP2 for the hydraulic pump 2 (S305), and changes the tilting of the second hydraulic pump 2 according to the flow rate control command pressure PiP2 (S306). Then, the controller 94 ends the processing.

When it is determined in step S302 that the automatic control function is valid (YES), the target actuator supply flow rate computation section 94f of the controller 94 calculates target actuator supply flow rates Qact_Aa, Qact_Ab, ... (steps S311a, S311b, ...). Here, the target actuator supply flow rate Qact_Aa is a target flow rate of a hydraulic fluid to be supplied from the second hydraulic pump 2 to the boom cylinder 204a, and the target actuator supply flow rate Qact_Ab is a target flow rate of a hydraulic fluid to be supplied from the second hydraulic pump 2 to the arm cylinder 205a.

After steps S311a, S311b, ..., the target pump flow rate computation section 94g of the controller 94 calculates, as a target pump flow rate Qpmp_A, the total of the target flow rates Qact_Aa, Qact_Ab, ... for the respective actuators (step S312), and outputs a command signal according to the target pump flow rate Qpmp_A to the solenoid proportional valve 93a for the flow rate control of the hydraulic pump 2 (S313). Then, the controller 94 executes the processing in steps S305 and S306 and ends the processing. Here, the target pump flow rate Qpmp_A is set suitably by a designer and need not be made coincide strictly with the total of the target flow rates for the respective actuators, and a bleed-off flow rate and/or a drain flow rate may be added to the target pump flow rate Qpmp_A.

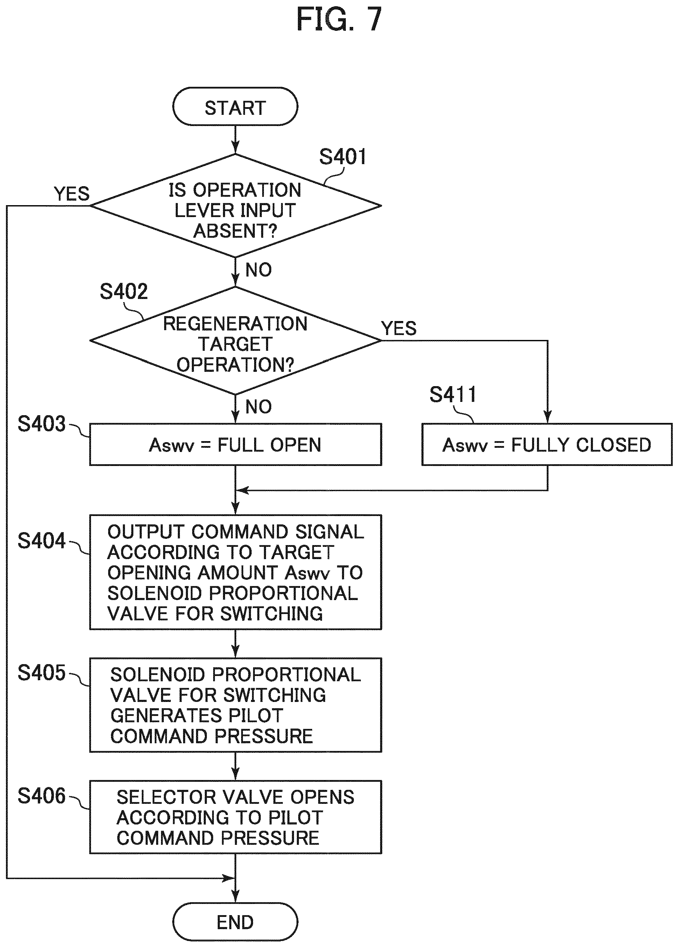

FIG. 7 is a flow chart depicting processing relating to control of the selector valve 36 by the controller 94. In the following, only processing relating to control of the selector valve 36 corresponding to the first arm directional control valve 11 is described. Since processing relating to control of the other selector valves (not depicted) is similar to the processing relating to the control of the selector valve 36, redundant description is omitted.

The controller 94 first determines whether or not an input of the arm operation lever 95b is absent (step S401). When it is determined in step S401 that an input of the arm operation lever 95b is absent (YES), it ends the processing.

When it is determined in step S401 that an input of the arm operation lever 95b is present (NO), the controller 94 determines whether or not the operation is the regeneration target operation (step S402). In the present working example, when the arm operation lever 95b is operated in the arm crowding direction, the controller 94 determines that the operation is the regeneration target operation (YES), but when the arm operation lever 95b is operated in the arm dumping direction, the controller 94 determines that the operation is not the regeneration target operation (NO).

When the controller 94 determines in step S402 that the operation is not the regeneration target operation (NO), the target selector valve opening computation section 94j of the controller 94 sets a target opening amount Avtv_M for the selector valve 36 to full open (step S403), but when the controller 94 determines that the operation is the regeneration target operation (YES), the target selector valve opening computation section 94j sets the target opening amount Aswv for the selector valve 36 to fully closed (step S411).

After step S403 or step S411, the target selector valve opening computation section 94j of the controller 94 outputs a command signal according to the target opening amount Aswv to the solenoid proportional valve 93h for the selector valve 36 (S404), causes the solenoid proportional valve 93h to generate pilot command pressure for the selector valve 36 (S405), and causes the selector valve 36 to open according to the pilot command pressure (S406). Then, the controller 94 ends the processing. Consequently, when the selector valve 36 is opened at the time of arm dumping, a hydraulic working fluid on the bottom side of the arm cylinder 205a is discharged, but when the selector valve 36 is closed at the time of arm crowding, a hydraulic working fluid on the rod side of the arm cylinder 205a is supplied to the bottom side via the regeneration valve 35.

(2) Operation

The operation of the hydraulic drive system 400 is described specifically in regard to an operation relating to the second hydraulic pump 2. Since operations relating to the other hydraulic pumps are similar to this operation, redundant description is omitted.

(2-1) Operation in state in which automatic control function is invalid

Operations of the components when the arm operation lever 95b is operated in a state in which the automatic control function is invalid are described.

·Directional control valve

The controller 94 calculates a target opening amount Ams for the first arm directional control valve 11 according to an input amount of the arm operation lever 95b and outputs a command signal according to the target opening amount Ams to the solenoid proportional valves 93d and 93e. The solenoid proportional valves 93d and 93e generate pilot command pressure PiAm1U and pilot command pressure PiAm1D according to the command signal to control the opening amount of the first arm directional control valve 11.

·Auxiliary flow rate control valve

The controller 94 calculates a target opening amount Afcv_M for the auxiliary flow rate control valve 25 (main valve 33) according to an input amount of the arm operation lever 95b and outputs a command signal according to the target opening amount Afcv_M to the solenoid proportional valve 93g. The solenoid proportional valve 93g generates pilot command pressure according to the command signal to control the opening amount of the auxiliary flow rate control valve 25 (main valve 33). In the present operation example, the auxiliary flow rate control valve 25 (main valve 33) is controlled so as to be fully opened.

·Hydraulic pump

The controller 94 calculates a target flow rate Qpmp_M for the second hydraulic pump 2 according to an input amount of the arm operation lever 95b and outputs a command signal according to the target pump flow rate Qpmp_M to the solenoid proportional valve 93a. The solenoid proportional valve 93a generates flow rate control command pressure PiP2 according to the command signal to control the flow rate in the second hydraulic pump 2.

·Selector valve

The controller 94 determines, on the basis of an input amount of the arm operation lever 95b, whether or not the operation is the regeneration target operation, and when the determination result is YES, the controller 94 sets the target opening amount Aswv for the selector valve 36 to fully closed, but when the determination result is NO, the controller 94 sets the target opening amount Aswv to full open. Then, the controller 94 outputs a command signal according to the target opening amount Aswv to the solenoid proportional valve 93h. The solenoid proportional valve 93h generates pilot command pressure according to the command signal to control the opening amount of the selector valve 36.

(2-2) Operation in state in which automatic control function is valid

Operations of the components when the arm operation lever 95b is operated in a state in which the automatic control function is valid are described.

·Directional control valve

The controller 94 calculates a target opening amount Ams for the first arm directional control valve 11 according to an input amount of the arm operation lever 95b and outputs a command signal according to the target opening amount Ams to the solenoid proportional valves 93d and 93e. The solenoid proportional valves 93d and 93e generate pilot command pressure PiAm1U and pilot command pressure PiAm1D according to the command signal to control the opening amount of the first arm directional control valve 11.

·Auxiliary flow rate control valve

The controller 94 calculates a target actuator flow rate Qref and a regeneration flow rate Qreg on the basis of an input amount of the arm operation lever 95b, posture information of the machine body 202 or the work device 203, designed face information, and pressure sensor output values. Then, the controller 94 subtracts the regeneration flow rate Qreg from the target actuator flow rate Qref to calculate a target actuator supply flow rate Qact_A, calculates a target opening amount Afcv_A for the auxiliary flow rate control valve 25 (main valve 33) on the basis of the target actuator supply flow rate Qact_A and the fore-and-aft differential pressure ΔPfcv across the auxiliary flow rate control valve 25 (main valve 33), and outputs a command signal according to the target opening amount Afcv_A to the solenoid proportional valve 93g. The solenoid proportional valve 93g generates pilot command pressure according to the command signal to control the opening amount of the auxiliary flow rate control valve 25 (main valve 33).

·Hydraulic pump

The controller 94 adds up the target supply flow rates Qact_A for the respective actuators to calculate a target pump flow rate Qpmp_A and outputs a command signal according to the target pump flow rate Qpmp_A to the solenoid proportional valve 93a. The solenoid proportional valve 93a generates flow rate control command pressure PiP2 according to the command signal to control the flow rate in the second hydraulic pump 2. It is to be noted that, since the present operation is stand-alone operation of the arm cylinder 205a, the target pump flow rate Qpmp_A is equal to the target supply flow rate Qact_A for the arm cylinder 205a.

·Selector valve

The controller 94 determines, on the basis of an input amount of the arm operation lever 95b, whether or not the regeneration function is valid, and when the determination result is YES, the controller 94 sets the target opening amount Aswv for the selector valve 36 to fully closed, but when the determination result is NO, the controller 94 sets the target opening amount Aswv to full open. Then, the controller 94 outputs a command signal according to the target opening amount Aswv to the solenoid proportional valve 93h. The solenoid proportional valve 93h generates pilot command pressure according to the command signal to control the opening amount of the selector valve 36.

(3) Advantageous effects

In the present embodiment, the work machine 300 includes the machine body 202, the work device 203 mounted on the machine body 202, the actuators 204a, 205a, 206a, and 211 that drive the machine body 202 or the work device 203, the hydraulic working fluid tank 5, the hydraulic pumps 1 to 3 that suck a hydraulic working fluid from the hydraulic working fluid tank 5 and that supply the hydraulic working fluid to the actuators 204a, 205a, 206a, and 211, the directional control valves 6 to 16 and 21 to 29 that are connected in parallel to the delivery lines 40, 50, and 60 of the hydraulic pumps 1 to 3 and that control the flow of a hydraulic fluid to be supplied from the hydraulic pumps 1 to 3 to the actuators 204a, 205a, 206a, and 211, the operation levers 95a and 95b that give instructions for the operations of the actuators 204a, 205a, 206a, and 211, and the controller 94 that controls the directional control valves 6 to 16 and 21 to 29 according to an input amount of the boom operation levers 95a and 95b. The work machine 300 further includes the regeneration valve 35 that allows a hydraulic working fluid to flow from the meter-out side to the meter-in side of the flow rate control valve 11, and the selector valve 36 that is provided on the tank line 70 connecting the directional control valve 11 and the hydraulic working fluid tank 5 to each other and that opens or interrupts the tank line 70. The controller 94 is configured to calculate a target actuator flow rate Qref that is a target flow rate for the actuators 204a, 205a, 206a, and 211, on the basis of an input amount of the operation levers 95a and 95b, calculate a regeneration flow rate Qreg that is a passage flow rate Qreg of a hydraulic fluid passing through the regeneration valve 35, on the basis of the input amount of the operation levers 95a and 95b and the target actuator flow rate Qref, subtract the regeneration flow rate Qreg from the target actuator flow rate Qref to calculate a target actuator supply flow rate Qact_A, calculate a target opening amount Afcv_A for the flow rate control valve on the basis of the target actuator supply flow rate Qact_A, calculate a target pump flow rate Qpmp-A that is equal to or higher than the total target actuator supply flow rate Afcv_A, control the selector valve 36 on the basis of the input amount of the operation levers 95a and 95b, control the auxiliary flow rate control valves 21 to 29 according to the target opening amount Afcv_A for the flow rate control valve, and control the hydraulic pumps 1 to 3 according to the target pump flow rate Qpmp_A.

Further, the directional control valves 6 to 16 and 21 to 29 include the directional control valves 6 to 16 that control a direction of a hydraulic fluid to be supplied from the hydraulic pumps 1 to 3 to the actuators 204a, 205a, 206a, and 211, and the auxiliary flow rate control valves 21 to 29 that restrict the flow rate of a hydraulic fluid to be supplied from the hydraulic pumps 1 to 3 to the meter-in ports of the directional control valves 6 to 16. The regeneration valve 35 is arranged on the hydraulic line that connects the meter-out port and the meter-in port of the directional control valve 11 to each other.

According to the present working example configured in such a manner as described above, the auxiliary flow rate control valves 21 to 29 and the hydraulic pumps 1 to 3 are controlled such that the total of the target flow rate of a hydraulic fluid to be supplied from the hydraulic pumps 1 to 3 to the actuators (target actuator supply flow rate Qact_A) and the regeneration flow rate Qreg in the actuators becomes equal to the target flow rate for the actuators (target actuator flow rate Qref). Consequently, while the position control accuracy of the actuators is secured, the operation speed of the actuators can be increased by the regeneration function. Thus, the work efficiency of the work machine 100 can be improved. Further, by closing the selector valve 36 upon regeneration, the full amount of the return flow rate in the actuators can be regenerated with certainty. Moreover, since the regeneration flow rate coincides with the return flow rate in the actuators, control of the regeneration flow rate based on the fore-and-aft differential pressure across the regeneration valve 35 becomes unnecessary. By making the operation of the selector valve 36 simple as an ON/OFF operation, the pressure sensor for detecting the differential pressure across the regeneration valve 35 becomes unnecessary, and therefore, the configuration of the hydraulic drive system 400 can be simplified.

Further, the work machine 300 according to the present working example includes the automatic control function changeover switch 96 that gives an instruction for validation or invalidation of the automatic control function of the machine body 202 or the work device 203. When a an instruction for invalidation of the automatic control function is given from the automatic control function changeover switch 96, the controller 94 calculates a target opening amount Afcv_M for the flow rate control valve and a target pump flow rate Qpmp_M on the basis of an input amount of the operation levers 95a and 95b. Consequently, when the automatic control function is invalidated, the operation speed of the actuators can be increased by the regeneration function similarly to a conventional work machine.

[Second Working Example]

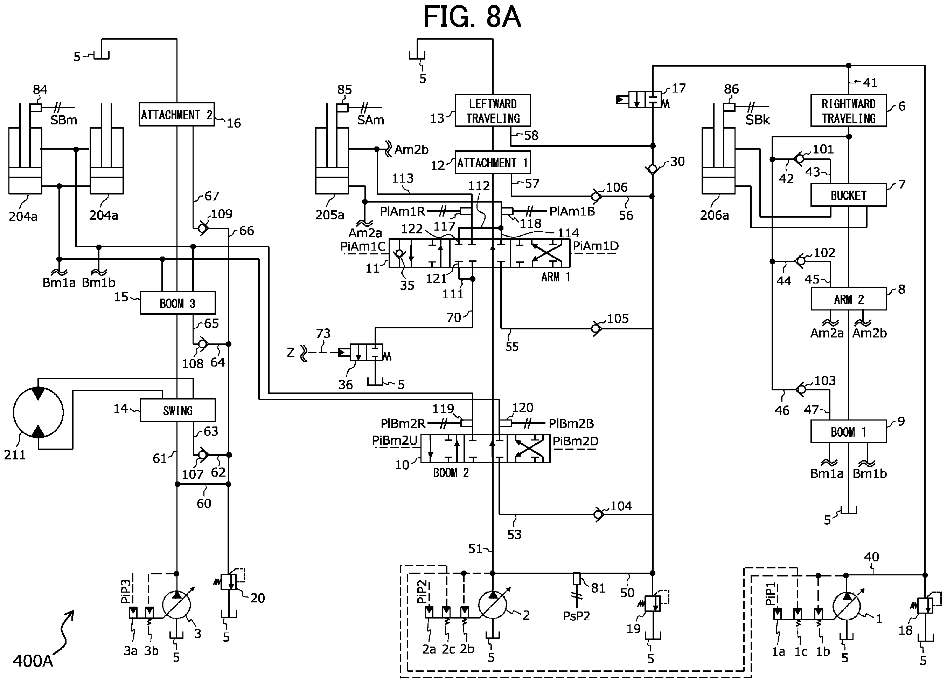

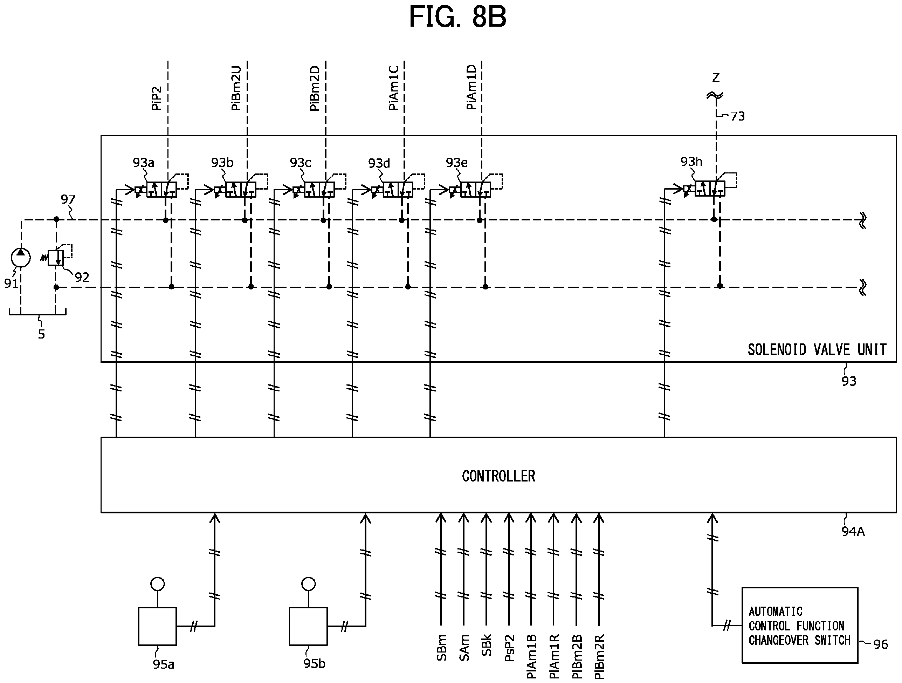

FIGS. 8A and 8B are circuit diagrams of a hydraulic drive system according to a second working example of the present invention.

(1) Configuration

The configuration of a hydraulic drive system 400A according to the present working example is substantially similar to that of the hydraulic drive system 400 (depicted in FIGS. 2A and 2B) according to the first working example, but the hydraulic drive system 400A and the hydraulic drive system 400 are different in the following features.

The hydraulic drive system 400A according to the present working example includes, in place of the auxiliary flow rate control valves 21 to 29 in the first working example, check valves 101 to 109 for preventing backflow from the actuator side to the delivery lines 40, 50 and 60.

The regeneration valve 35 in the present working example is arranged in the inside of the spool of the first arm directional control valve 11, and regeneration ports 121 and 122 are provided in the first arm directional control valve 11. To the regeneration port 121, a hydraulic line 111 branching from a tank line 70 connected to the meter-out port of the first arm directional control valve 11 is connected. To the regeneration port 122, a hydraulic line 112 branching from the hydraulic line 114 that connects the first arm directional control valve 11 and the bottom side of the arm cylinder 205a to each other is connected. When a switching operation is performed on the spool of the first arm directional control valve 11 in the crowding direction (rightward direction in FIGS. 8A and 8B), the hydraulic line 111 is connected to the upstream side of the regeneration valve 35, and the hydraulic line 112 is connected to the downstream side of the regeneration valve 35. Consequently, a hydraulic working fluid discharged from the rod side of the arm cylinder 205a is supplied to the bottom side via the regeneration valve 35. Pressure sensors 117 and 118 are respectively provided on the hydraulic lines 113 and 114 that connect the first arm directional control valve 11 and the arm cylinder 205a to each other. It is to be noted that, although illustration is partly omitted in order to simplify the description, the directional control valves 6 to 16 and their peripheral components, pipes, and wires are all the same in configuration.

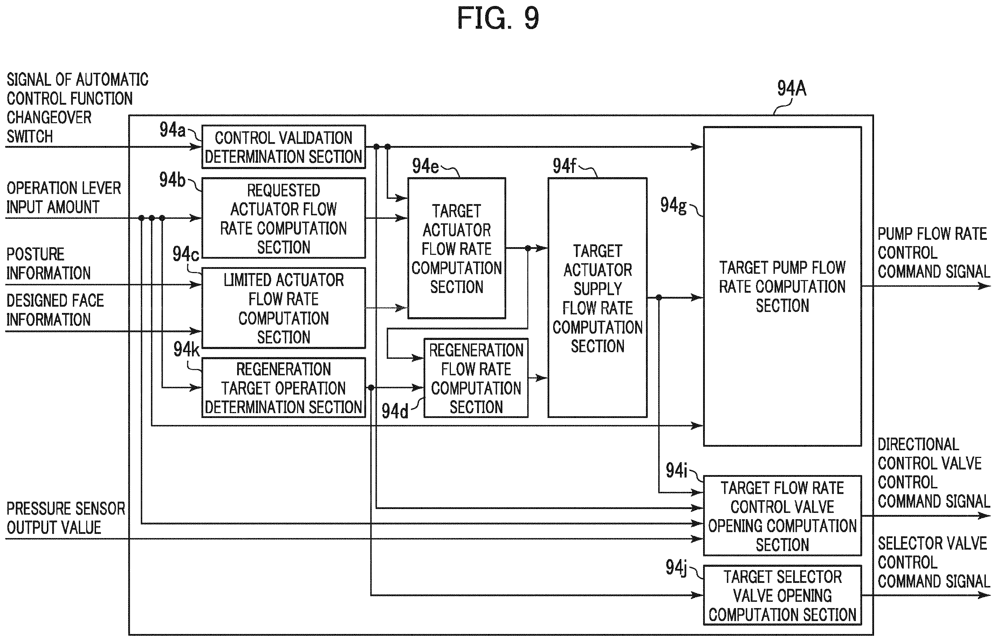

FIG. 9 is a functional block diagram of a controller 94A in the present working example. Referring to FIG. 9, the controller 94A in the present working example includes a target directional control valve opening computation section 941 in place of the target directional control valve opening computation section 94h and the target flow rate control valve opening computation section 94i (depicted in FIG. 3) in the first working example. The target directional control valve opening computation section 941 calculates a target opening amount for the directional control valves 6 to 16 on the basis of a result of determination from the control validation determination section 94a, a target actuator supply flow rate from the target actuator supply flow rate computation section 94f, an operation lever input amount, and pressure sensor output values, and outputs a command signal (directional control valve control command signal) according to the target opening amount.

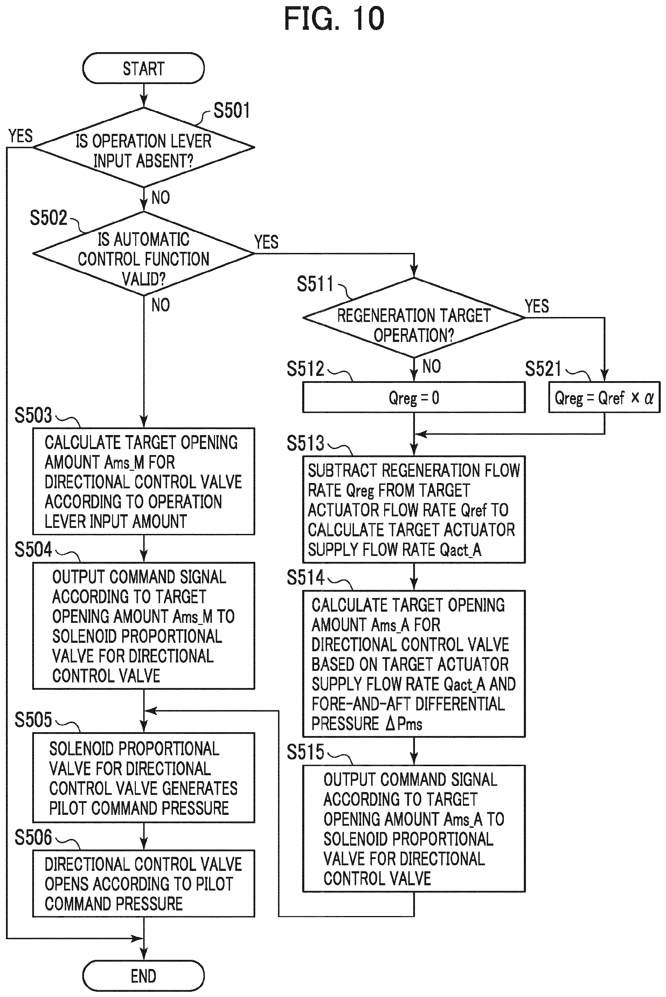

FIG. 10 is a flow chart depicting processing relating to control of the directional control valves 6 to 16 by the controller 94A. In the following, only processing relating to control of the first arm directional control valve 11 is described. Since processing relating to control of the other directional control valves is similar to the processing relating to the control of the first arm directional control valve 11, redundant description is omitted.

The controller 94 first determines whether or not an input of the arm operation lever 95b is absent (step S501). When it is determined in step S501 that an input of the arm operation lever 95b is absent (YES), the controller 94 ends the processing. When it is determined in step S501 that an input of the arm operation lever 95b is present (NO), the controller 94 determines whether or not the automatic control function (machine control) is valid (step S502).

When it is determined in step S502 that the automatic control function is invalid (NO), the target flow rate control valve opening computation section 94i of the controller 94 calculates a target opening amount Ams_M for the directional control valve 11 according to the input amount of the arm operation lever 95b (step S503), outputs a command signal according to the target opening amount Ams_M to the solenoid proportional valves 93d and 93e for the directional control valve 11 (S504), causes the solenoid proportional valves 93d and 93e to generate pilot command pressure for the directional control valve 11 (S505), and causes the directional control valve 11 to open according to the pilot command pressure (S506). Then, the controller 94 ends the processing.

When it is determined in step S502 that the automatic control function is valid (YES), the regeneration target operation determination section 94k of the controller 94 determines, on the basis of the input amount of the arm operation lever 95b, whether or not the operation is the regeneration target operation (step S511). In the present working example, when the arm operation lever 95b is operated in the arm crowding direction, the regeneration target operation determination section 94k determines that the operation is the regeneration target operation (YES), but when the arm operation lever 95b is operated in the arm dumping direction, the regeneration target operation determination section 94k determines that the operation is not the regeneration target operation (NO).

When it is determined in step S511 that the operation is not the regeneration target operation (NO), the regeneration flow rate computation section 94d of the controller 94 sets the regeneration flow rate Qreg to zero (step S512), but when it is determined that the operation is the regeneration operation (YES), the regeneration flow rate computation section 94d multiplies the target actuator flow rate Qreg by a meter-in meter-out flow rate $\alpha$ to calculate a regeneration flow rate Qreg (step S521).

After step S512 or step S521, the target actuator supply flow rate computation section 94f of the controller 94 subtracts the regeneration flow rate Qreg from the target actuator flow rate Qref to calculate a target actuator supply flow rate Qact_A (step S513), and the target flow rate control valve opening computation section 94i of the controller 94 calculates a target opening amount Ams_A for the directional control valve 11 on the basis of the target actuator supply flow rate Qact_A and the fore-and-aft differential pressure $\Delta$Pms across the directional control valve 11 (step S514), and outputs a command signal according to the target opening amount Ams_A to the solenoid proportional valves 93d and 93e for the directional control valve 11 (step S515). Then, after the controller 94 executes the processing in steps S505 and S506, it ends the processing.

(2) Operation

The operation of the hydraulic drive system 400A in the second working example is described specifically in regard to an operation relating to the second hydraulic pump **2.** Since operations relating to the other hydraulic pumps are similar to the operation, redundant description is omitted.

(2-1) Operation in state in which automatic control function is invalid

Operations of the components when the arm operation lever 95b is operated in a state in which the automatic control function is invalid are described.

·Directional control valve

The controller 94A calculates a target opening amount Ams_M for the first arm directional control valve 11 according to an input amount of the arm operation lever 95b and outputs a command signal according to the target opening amount Ams_M to the solenoid proportional valves 93d and 93e. The solenoid proportional valves 93d and 93e generate pilot command pressure PiAm1U and pilot command pressure PiAm1D according to the command signal to control the opening amount of the first arm directional control valve 11.

·Hydraulic pump

Since the operation of the hydraulic pump is similar to that in the first working example, description of it is omitted.

·Selector valve

Since the operation of the selector valve is similar to that in the first working example, description of it is omitted.

(2-2) Operation in state in which automatic control function is valid

Operations of the components when the arm operation lever 95b is operated in a state in which the automatic control function is valid are described.

·Directional control valve

The controller 94A calculates a target actuator flow rate Qref and a regeneration flow rate Qreg on the basis of an input amount of the arm operation lever 95b, posture information of the machine body 202 or the work device 203, designed face information, and pressure sensor output values, subtracts the regeneration flow rate Qreg from the target actuator flow rate Qref to calculate a target actuator supply flow rate Qact_A, calculates a target opening amount Ams_A for the directional control valve 11 on the basis of the target actuator supply flow rate Qact_A and the fore-and-aft differential pressure ΔPms across the directional control valve 11, and outputs a command signal according to the target opening amount Ams_A to the solenoid proportional valves 93d and 93e. The solenoid proportional valves 93d and 93e generate pilot command pressure PiAm1U and pilot command pressure PiAm1D according to the command signal to control the opening amount of the directional control valve 11.

·Hydraulic pump

Since the operation of the hydraulic pump is similar to that in the first working example, description of it is omitted.

·Selector valve

Since the operation of the selector valve is similar to that in the first working example, description of it is omitted.

(3) Advantageous effects

In the second working example, the directional control valves 6 to 16, which control the flow of a hydraulic fluid that is to be supplied from the hydraulic pumps 1 to 3 to the actuators 204a, 205a, 206a, and 211, are directional control valves that control the direction and the flow rate of a hydraulic fluid to be supplied from the hydraulic pumps 1 to 3 to the actuators 204a, 205a, 206a, and 211. The regeneration valve 35 is arranged in the inside of the spool of the directional control valve 11.

According to the second working example configured in such a manner as described above, the operation speed of the actuators can be increased by the regeneration function while the position control accuracy of the actuators is secured, with a simpler configuration than that in the first working example. Consequently, the work efficiency of the work machine 100 can be improved while the cost is suppressed.

Description of Reference Characters

1: First hydraulic pump
1a: Flow rate control command pressure port (regulator)
1b: First hydraulic pump self-pressure port (regulator)
1c: Second hydraulic pump self-pressure port (regulator)
2: Second hydraulic pump
2a: Flow rate control command pressure port (regulator)
2b: Second hydraulic pump self-pressure port (regulator)
2c: First hydraulic pump self-pressure port (regulator)
3: Third hydraulic pump
3a: Flow rate control command pressure port (regulator)
3b: Third hydraulic pump self-pressure port (regulator)
5: Hydraulic working fluid tank
6: Rightward traveling directional control valve (flow rate control valve)
7: Bucket directional control valve (flow rate control valve)
8: Second arm directional control valve (flow rate control valve)
9: First boom directional control valve (flow rate control valve)
10: Second boom directional control valve (flow rate control valve)
11: First arm directional control valve (flow rate control valve)
12: First attachment directional control valve (flow rate control valve)
13: Leftward traveling directional control valve (flow rate control valve)
14: Swinging directional control valve (flow rate control valve)
15: Third boom directional control valve (flow rate control valve)
16: Second attachment directional control valve (flow rate control valve)
17: Merge valve
18 to 20: Main relief valve
21 to 29: Auxiliary flow rate control valve (flow rate control valve)
30: Check valve
31: Main valve
31a: Valve body
31b: Control variable restrictor
31c: First pressure chamber
31d: Second pressure chamber
31e: Third pressure chamber
32: Pilot variable restrictor
32a: Pilot port
33: Main valve
33a: Valve body
33b: Control variable restrictor
33c: First pressure chamber
33d: Second pressure chamber
33e: Third pressure chamber
34: Pilot variable restrictor
34a: Pilot port
35: Regeneration valve
36: Selector valve
41: Center bypass line
42 to 47: Hydraulic line
51: Center bypass line
52 to 58: Hydraulic line
61: Center bypass line
62 to 69: Hydraulic line
70: Tank line
71 to 75: Hydraulic line
81 to 83: Pressure sensor

84 to 86: Stroke sensor

91: Pilot pump

92: Pilot relief valve

93: Solenoid valve unit

93a to 93h: Solenoid proportional valve

94, 94A: Controller

94a: Control validation determination section

94b: Requested actuator flow rate computation section

94c: Limited actuator flow rate computation section

94d: Regeneration flow rate computation section

94e: Target actuator flow rate computation section

94f: Target actuator supply flow rate computation section

94g: Target pump flow rate computation section

94h: Target Directional control valve opening computation section

94i: Target flow rate control valve opening computation section

94j: Target selector valve opening computation section

94k: Regeneration target operation determination section

94l: Target directional control valve opening computation section

95a: Boom operation lever

95b: Arm operation lever

96: Automatic control function changeover switch

97: Hydraulic line

101 to 109: Check valve

111 to 114: Hydraulic line

117 to 120: Pressure sensor

121, 122: Regeneration port

201: Track structure

202: Swing structure (machine body)

203: Work device

204: Boom

204a: Boom cylinder (actuator)

205: Arm

205a: Arm cylinder (actuator)

206: Bucket

206a: Bucket cylinder (actuator)

207: Operation room

208: Machine room

209: Counterweight

210: Control valve

211: Swing motor (actuator)

300: Hydraulic excavator (work machine)

400, 400A: Hydraulic drive system

## Claims

1. A work machine comprising:

   a machine body (202);
   a work device (203) mounted on the machine body (202);
   an actuator (204a, 205a, 206a, 211) that drives the machine body (202) or the work device (203);
   a hydraulic working fluid tank (5);
   a hydraulic pump (1 to 3) that sucks a hydraulic working fluid from the hydraulic working fluid tank (5) and supplies the hydraulic working fluid to the actuator (204a, 205a, 206a, 211);
   a flow rate control valve (6 to 16, 21 to 29) that is connected in parallel to a delivery line (40, 50, 60) of the hydraulic pump (1 to 3) and controls a flow of a hydraulic fluid to be supplied from the hydraulic pump (1 to 3) to the actuator (204a, 205a, 206a, 211);
   an operation lever (95a, 95b) that gives an instruction for an operation of the actuator (204a, 205a, 206a, 211);

a controller (94) that controls the flow rate control valve (6 to 16, 21 to 29) according to an input amount of the operation lever (95a, 95b);
a regeneration valve (35) that allows a hydraulic working fluid to flow from a meter-out side to a meter-in side of the flow rate control valve (6 to 16, 21 to 29); and
a selector valve (36) that is provided on a tank line (70) connecting the flow rate control valve (6 to 16, 21 to 29) and the hydraulic working fluid tank (5) to each other and opens or interrupts the tank line (70),
**characterized in that**
the controller (94) is configured to

calculate a target actuator flow rate that is a target flow rate for the actuator (204a, 205a, 206a, 211), on the basis of the input amount of the operation lever (95a, 95b),
calculate a regeneration flow rate that is a flow rate of a hydraulic fluid passing through the regeneration valve (35), on the basis of the input amount of the operation lever (95a, 95b) and the target actuator flow rate,
subtract the regeneration flow rate from the target actuator flow rate to calculate a target actuator supply flow rate,
calculate a target flow rate control valve opening amount on the basis of the target actuator flow rate,
calculate a target pump flow rate that is equal to or higher than a total target actuator supply flow rate,
control the selector valve (36) on the basis of the input amount of the operation lever (95a, 95b),
control the flow rate control valve (6 to 16, 21 to 29) according to the target flow rate control valve opening amount, and
control the hydraulic pump (1 to 3) according to the target pump flow rate.

2. The work machine according to claim 1, wherein

the flow rate control valve (6 to 16, 21 to 29) includes

a directional control valve (6 to 16) that controls a direction of a hydraulic fluid to be supplied from the hydraulic pump (1 to 3) to the actuator (204a, 205a, 206a, 211), and
an auxiliary flow rate control valve (21 to 29) that restricts a flow rate of a hydraulic fluid to be supplied from the hydraulic pump (1 to 3) to a meter-in port of the directional control valve (6 to 16), and

the regeneration valve (35) is arranged on a hydraulic line that connects a meter-out port and the meter-in port of the directional control valve (6 to 16) to each other.

3. The work machine according to claim **1,** wherein

the flow rate control valve (6 to 16) is a directional control valve (6 to 16) that controls a direction and a flow rate of a hydraulic fluid to be supplied from the hydraulic pump (1 to 3) to the actuator (204a, 205a, 206a, 211), and
the regeneration valve (35) is arranged inside a spool of the directional control valve (6 to 16).

4. The work machine according to claim 1, wherein

the work machine includes an automatic control function changeover switch (96) that gives an instruction for validation or invalidation of an automatic control function of the machine body (202) or the work device (203), wherein
the controller (94) is configured to, in a case where an instruction for invalidation of the automatic control function is given from the automatic control function changeover switch (96), calculate the target flow rate control valve opening amount and the target pump flow rate on the basis of the input amount of the operation lever (95a, 95b).

**Patentansprüche**

1. Arbeitsmaschine, umfassend:

einen Maschinenkörper (202);
eine Arbeitsvorrichtung (203), die an dem Maschinenkörper (202) montiert ist;
einen Aktor (204a, 205a, 206a, 211), der den Maschinenkörper (202) oder die Arbeitsvorrichtung (203) antreibt;
einen Hydraulikarbeitsfluidtank (5);

eine Hydraulikpumpe (1 bis 3), die ein Hydraulikarbeitsfluid aus dem Hydraulikarbeitsfluidtank (5) ansaugt und das Hydraulikarbeitsfluid dem Aktor (204a, 205a, 206a, 211) zuführt;

ein Durchflussratensteuerventil (6 bis 16, 21 bis 29), das parallel mit einer Förderleitung (40, 50, 60) der Hydraulikpumpe (1 bis 3) verbunden ist und eine Strömung eines Hydraulikfluids steuert, das von der Hydraulikpumpe (1 bis 3) dem Aktor (204a, 205a, 206a, 211) zugeführt wird;

einen Betätigungshebel (95a, 95b), der eine Anweisung für eine Betätigung des Aktors (204a, 205a, 206a, 211) gibt;

eine Steuereinheit (94), die das Durchflussratensteuerventil (6 bis 16, 21 bis 29) gemäß einem Eingabebetrag des Betätigungshebels (95a, 95b) steuert;

ein Regenerationsventil (35), das es einem Hydraulikarbeitsfluid ermöglicht, von einer Ausgangsseite zu einer Eingangsseite des Durchflussratensteuerventils (6 bis 16, 21 bis 29) zu strömen; und

ein Auswahlventil (36), das an einer Tankleitung (70) vorgesehen ist, wobei es das Durchflussratensteuerventil (6 bis 16, 21 bis 29) und den Hydraulikarbeitsfluidtank (5) miteinander verbindet und die Tankleitung (70) öffnet oder unterbricht,

**dadurch gekennzeichnet, dass**
die Steuereinheit (94) konfiguriert ist, um
eine Ziel-Aktordurchflussrate, die eine Ziel-Durchflussrate für den Aktor (204a, 205a, 206a, 211) ist, auf der Grundlage des Eingabebetrags des Betätigungshebels (95a, 95b) zu berechnen,

eine Regenerationsdurchflussrate, die eine Durchflussrate eines Hydraulikfluids ist, das durch das Regenerationsventil (35) strömt, auf der Grundlage des Eingabebetrags des Betätigungshebels (95a, 95b) und der Ziel-Aktordurchflussrate zu berechnen,

die Regenerationsdurchflussrate von der Ziel-Aktordurchflussrate zu subtrahieren, um eine Ziel-Aktorzufuhrdurchflussrate zu berechnen,

einen Ziel-Öffnungsbetrag des Durchflussratensteuerventils auf der Grundlage der Ziel-Aktordurchflussrate zu berechnen,

eine Ziel-Pumpendurchflussrate zu berechnen, die gleich oder höher als eine Gesamtziel-Aktorzufuhrdurchflussrate ist,

das Auswahlventil (36) auf der Grundlage des Eingabebetrags des Betätigungshebels (95a, 95b) zu steuern,

das Durchflussratensteuerventil (6 bis 16, 21 bis 29) gemäß dem Zielöffnungsbetrag des Durchflussratensteuerventils zu steuern, und

die Hydraulikpumpe (1 bis 3) gemäß der Ziel-Pumpendurchflussrate zu steuern.

2. Arbeitsmaschine nach Anspruch 1, wobei

das Durchflussratensteuerventil (6 bis 16, 21 bis 29)

ein Richtungssteuerventil (6 bis 16), das eine Richtung eines Hydraulikfluids steuert, das von der Hydraulikpumpe (1 bis 3) dem Aktor (204a, 205a, 206a, 211) zugeführt wird, und

ein Hilfs-Durchflussratensteuerventil (21 bis 29) umfasst, das eine Durchflussrate eines Hydraulikfluids begrenzt, das von der Hydraulikpumpe (1 bis 3) einem Eingangsanschluss des Richtungssteuerventils (6 bis 16) zugeführt wird, und

das Regenerationsventil (35) an einer Hydraulikleitung angeordnet ist, die einen Ausgangsanschluss und den Eingangsanschluss des Richtungssteuerventils (6 bis 16) miteinander verbindet.

3. Arbeitsmaschine nach Anspruch 1, wobei

das Durchflussratensteuerventil (6 bis 16) ein Richtungssteuerventil (6 bis 16) ist, das eine Richtung und eine Durchflussrate eines Hydraulikfluids steuert, das von der Hydraulikpumpe (1 bis 3) dem Aktor (204a, 205a, 206a, 211) zugeführt wird, und

das Regenerationsventil (35) innerhalb einer Spule des Richtungssteuerventils (6 bis 16) angeordnet ist.

4. Arbeitsmaschine nach Anspruch 1, wobei

die Arbeitsmaschine einen automatischen Steuerfunktionsumschalter (96) umfasst, der eine Anweisung zur Validierung oder Invalidierung einer automatischen Steuerfunktion des Maschinenkörpers (202) oder der Arbeitsvorrichtung (203) gibt, wobei

die Steuereinheit (94) konfiguriert ist, um in einem Fall, in dem eine Anweisung zur Invalidierung der automatischen Steuerfunktion von dem automatischen Steuerfunktionsumschalter (96) gegeben wird, den Ziel-Öffnungsbetrag des Durchflussratensteuerventils und die Ziel-Pumpendurchflussrate auf der Grundlage des Eingabebetrags des Betätigungshebels (95a, 95b) zu berechnen.

**Revendications**

1. Machine de chantier comprenant :

   un corps de machine (202) ;
   un dispositif de travail (203) monté sur le corps de machine (202) ;
   un actionneur (204a, 205a, 206a, 211) qui entraîne le corps de machine (202) ou le dispositif de travail (203) ;
   un réservoir à fluide de travail hydraulique (5) ;
   une pompe hydraulique (1 à 3) qui aspire un fluide de travail hydraulique du réservoir à fluide de travail hydraulique (5) et qui alimente le fluide de travail hydraulique à l'actionneur (204a, 205a, 206a, 211) ;
   une vanne de commande de débit (6 à 16, 21 à 29) qui est connectée en parallèle à une conduite de distribution (40, 50, 60) de la pompe hydraulique (1 à 3) et qui commande un écoulement d'un fluide hydraulique qu'il s'agit d'alimenter depuis la pompe hydraulique (1 à 3) à l'actionneur (204a, 205a, 206a, 211) ;
   un levier d'actionnement (95a, 95b) qui donne une instruction d'actionnement de l'actionneur (204a, 205a, 206a, 211) ;
   un contrôleur (94) qui commande la vanne de commande de débit (6 à 16, 21 à 29) en fonction d'une amplitude d'entrée du levier d'actionnement (95a, 95b) ;
   une vanne de régénération (35) qui permet à un fluide de travail hydraulique de s'écouler depuis un côté de dosage sortant jusqu'à un côté de dosage entrant de la vanne de commande de débit (6 à 16, 21 à 29) ; et
   une vanne de sélection (36) qui est prévue sur une conduite de réservoir (70) connectant l'une à l'autre la vanne de commande de débit (6 à 16, 21 à 29) et le réservoir à fluide de travail hydraulique (5), et qui ouvre ou interrompt la conduite de réservoir (70),
   **caractérisée en ce que**
   le contrôleur (94) est configuré pour
   calculer un débit d'actionneur cible qui est un débit cible pour l'actionneur (204a, 205a, 206a, 211), sur la base de l'amplitude d'entrée du levier d'actionnement (95a, 95b),
   calculer un débit de régénération qui est un débit d'un fluide hydraulique passant à travers la vanne de régénération (35), sur la base de l'amplitude d'entrée du levier d'actionnement (95a, 95b) et du débit d'actionneur cible, soustraire le débit de régénération du débit d'actionneur cible pour calculer un débit d'alimentation d'actionneur cible,
   calculer une amplitude d'ouverture de vanne de commande de débit cible sur la base du débit d'actionneur cible,
   calculer un débit de pompe cible qui est égal ou supérieur à un débit d'alimentation d'actionneur cible total,
   commander la vanne de sélection (36) sur la base de l'amplitude d'entrée du levier d'actionnement (95a, 95b),
   commander la vanne de commande de débit (6 à 16, 21 à 29) en fonction de l'amplitude d'ouverture de vanne de commande de débit cible, et commander la pompe hydraulique (1 à 3) en fonction du débit de pompe cible.

2. Machine de chantier selon la revendication 1, dans laquelle

   la vanne de commande de débit (6 à 16, 21 à 29) inclut
   une vanne de commande directionnelle (6 à 16) qui commande une direction d'un fluide hydraulique qu'il s'agit d'alimenter depuis la pompe hydraulique (1 à 3) à l'actionneur (204a, 205a, 206a, 211), et
   une vanne de commande de débit auxiliaire (21 à 29) qui restreint un débit du fluide hydraulique qu'il s'agit d'alimenter depuis la pompe hydraulique (1 à 3) un orifice de dosage entrant de la vanne de commande directionnelle (6 à 16), et
   la vanne de régénération (35) est agencée sur une conduite hydraulique qui connecte l'un à l'autre un orifice de dosage sortant et l'orifice de dosage entrant de la vanne de commande directionnelle (6 à 16).

3. Machine de chantier selon la revendication 1, dans laquelle

   la vanne de commande de débit (6 à 16) est une vanne de commande directionnelle (6 à 16) qui commande une direction et un débit du fluide hydraulique qu'il s'agit d'alimenter depuis la pompe hydraulique (1 à 3) à l'actionneur (204a, 205a, 206a, 211), et
   la vanne de régénération (35) est agencée à l'intérieur d'un tiroir de la vanne de commande directionnelle (6 à 16).

4.  Machine de chantier selon la revendication 1, dans laquelle

la machine de chantier inclut un commutateur de basculement de fonction de commande automatique (96) qui donne une instruction de validation ou d'invalidation d'une fonction de commande automatique du corps de machine (202) ou du dispositif de travail (203), dans laquelle

le contrôleur (94) est configuré pour, dans un cas dans lequel une instruction d'invalidation de la fonction de commande automatique est donnée à partir du commutateur de basculement de fonction de commande automatique (96), calculer l'amplitude d'ouverture de vanne de commande de débit cible et le débit de pompe cible sur la base de l'amplitude d'entrée du levier d'actionnement (95a, 95b).

# FIG. 1

# FIG. 2A

# FIG. 2B

SOLENOID VALVE UNIT

CONTROLLER

AUTOMATIC CONTROL FUNCTION CHANGEOVER SWITCH ~96

PiP2    PiBm2U    PiBm2D    PiAm1C    PiAm1D    X    Y    Z

SBm  SAm  SBk  PsP2  PyAm1  PyBm2

EP 4 012 113 B1

# FIG. 3

SIGNAL OF AUTOMATIC CONTROL FUNCTION CHANGEOVER SWITCH

OPERATION LEVER INPUT AMOUNT

POSTURE INFORMATION

DESIGNED FACE INFORMATION

PRESSURE SENSOR OUTPUT VALUE

94

94a CONTROL VALIDATION DETERMINATION SECTION

94b REQUESTED ACTUATOR FLOW RATE COMPUTATION SECTION

94c LIMITED ACTUATOR FLOW RATE COMPUTATION SECTION

94k REGENERATION TARGET OPERATION DETERMINATION SECTION

94e TARGET ACTUATOR FLOW RATE COMPUTATION SECTION

94d REGENERATION FLOW RATE COMPUTATION SECTION

94f TARGET ACTUATOR SUPPLY FLOW RATE COMPUTATION SECTION

94g TARGET PUMP FLOW RATE COMPUTATION SECTION

94h TARGET DIRECTIONAL CONTROL VALVE OPENING COMPUTATION SECTION

94i TARGET FLOW RATE CONTROL VALVE OPENING COMPUTATION SECTION

94j TARGET SELECTOR VALVE OPENING COMPUTATION SECTION

PUMP FLOW RATE CONTROL COMMAND SIGNAL

DIRECTIONAL CONTROL VALVE CONTROL COMMAND SIGNAL

FLOW RATE CONTROL VALVE CONTROL COMMAND SIGNAL

SELECTOR VALVE CONTROL COMMAND SIGNAL

EP 4 012 113 B1

# FIG. 4

START

S101

YES ← IS OPERATION LEVER
INPUT ABSENT?

NO

S102 — CALCULATE TARGET OPENING
AMOUNT Ams FOR DIRECTIONAL
CONTROL VALVE ACCORDING TO
OPERATION LEVER INPUT AMOUNT

S103 — OUTPUT COMMAND SIGNAL
ACCORDING TO TARGET OPENING
AMOUNT Ams TO SOLENOID
PROPORTIONAL VALVE FOR
DIRECTIONAL CONTROL VALVE

S104 — SOLENOID PROPORTIONAL VALVE
FOR DIRECTIONAL CONTROL
VALVE GENERATES PILOT
COMMAND PRESSURE

S105 — DIRECTIONAL CONTROL VALVE
OPENS ACCORDING TO PILOT
COMMAND PRESSURE

END

# FIG. 5

START

S201
IS OPERATION LEVER
INPUT ABSENT?

YES

NO

S202
IS AUTOMATIC
CONTROL FUNCTION
VALID?

YES

NO

S211
REGENERATION TARGET
OPERATION?

YES

NO

S212
Qreg = 0

S221
Qreg = Qref × α

S203
CALCULATE TARGET OPENING
AMOUNT Afcv_M FOR AUXILIARY
FLOW RATE CONTROL VALVE
ACCORDING TO OPERATION
LEVER INPUT AMOUNT

S213
SUBTRACT REGENERATION FLOW
RATE Qreg FROM TARGET
ACTUATOR FLOW RATE Qref TO
CALCULATE TARGET ACTUATOR
SUPPLY FLOW RATE Qact_A

S204
OUTPUT COMMAND SIGNAL
ACCORDING TO TARGET
OPENING AMOUNT Afcv_M TO
SOLENOID PROPORTIONAL
VALVE FOR AUXILIARY FLOW
RATE CONTROL VALVE

S214
CALCULATE TARGET OPENING
AMOUNT Afcv_A FOR AUXILIARY
FLOW RATE CONTROL VALVE
BASED ON TARGET ACTUATO
SUPPLY FLOW RATE Qact_A AND
FORE-AND-AFT DIFFERENTIAL
PRESSURE ΔPfcv

S205
SOLENOID PROPORTIONAL
VALVE FOR AUXILIARY FLOW
RATE CONTROL VALVE
GENERATES PILOT COMMAND
PRESSURE

S215
OUTPUT COMMAND SIGNAL
ACCORDING TO TARGET
OPENING AMOUNT Afcv_A TO
SOLENOID PROPORTIONAL
VALVE FOR AUXILIARY FLOW
RATE CONTROL VALVE

S206
AUXILIARY FLOW RATE CONTROL
VALVE OPENS ACCORDING TO
PILOT COMMAND PRESSURE

END

27

# FIG. 6

START

S301

YES — IS OPERATION LEVER INPUT ABSENT?

NO

S302 — IS AUTOMATIC CONTROL FUNCTION VALID? — YES

ACTUATOR a

ACTUATOR b

S303 — NO

CALCULATE TARGET PUMP FLOW RATE Qpmp_M ACCORDING TO OPERATION LEVER INPUT AMOUNT

S311a — CALCULATE TARGET ACTUATOR SUPPLY FLOW RATE Qact_Aa

S311b — CALCULATE TARGET ACTUATOR SUPPLY FLOW RATE Qact_Ab

· · ·

S312 — CALCULATE TARGET PUMP FLOW RATE Qpmp_A FROM TARGET ACTUATOR SUPPLY FLOW RATES Qact_Aa, Qact_Ab, ...

S304 — OUTPUT COMMAND SIGNAL ACCORDING TO TARGET PUMP FLOW RATE Qpmp_M TO SOLENOID PROPORTIONAL VALVE FOR PUMP FLOW RATE CONTROL

S313 — OUTPUT COMMAND SIGNAL ACCORDING TO TARGET PUMP FLOW RATE Qpmp_A TO SOLENOID PROPORTIONAL VALVE FOR PUMP FLOW RATE CONTROL

S305 — SOLENOID PROPORTIONAL VALVE FOR PUMP FLOW RATE CONTROL GENERATES FLOW RATE CONTROL COMMAND PRESSURE

S306 — PUMP TILTING CHANGES ACCORDING TO FLOW RATE CONTROL COMMAND PRESSURE

END

# FIG. 7

START

IS OPERATION LEVER INPUT ABSENT? — S401

YES

NO

REGENERATION TARGET OPERATION? — S402

YES

NO

S403 — Aswv = FULL OPEN

S411 — Aswv = FULLY CLOSED

S404 — OUTPUT COMMAND SIGNAL ACCORDING TO TARGET OPENING AMOUNT Aswv TO SOLENOID PROPORTIONAL VALVE FOR SWITCHING

S405 — SOLENOID PROPORTIONAL VALVE FOR SWITCHING GENERATES PILOT COMMAND PRESSURE

S406 — SELECTOR VALVE OPENS ACCORDING TO PILOT COMMAND PRESSURE

END

# FIG. 8A

EP 4 012 113 B1

# FIG. 8B

SOLENOID VALVE UNIT

CONTROLLER

AUTOMATIC
CONTROL FUNCTION
CHANGEOVER SWITCH

EP 4 012 113 B1

FIG. 9

# FIG. 10

START

S501 — IS OPERATION LEVER INPUT ABSENT?

YES →

NO ↓

S502 — IS AUTOMATIC CONTROL FUNCTION VALID? — YES →

NO ↓

S503 — CALCULATE TARGET OPENING AMOUNT Ams_M FOR DIRECTIONAL CONTROL VALVE ACCORDING TO OPERATION LEVER INPUT AMOUNT

S504 — OUTPUT COMMAND SIGNAL ACCORDING TO TARGET OPENING AMOUNT Ams_M TO SOLENOID PROPORTIONAL VALVE FOR DIRECTIONAL CONTROL VALVE

S505 — SOLENOID PROPORTIONAL VALVE FOR DIRECTIONAL CONTROL VALVE GENERATES PILOT COMMAND PRESSURE

S506 — DIRECTIONAL CONTROL VALVE OPENS ACCORDING TO PILOT COMMAND PRESSURE

S511 — REGENERATION TARGET OPERATION? — YES →

NO ↓

S512 — Qreg = 0

S521 — Qreg = Qref × α

S513 — SUBTRACT REGENERATION FLOW RATE Qreg FROM TARGET ACTUATOR FLOW RATE Qref TO CALCULATE TARGET ACTUATOR SUPPLY FLOW RATE Qact_A

S514 — CALCULATE TARGET OPENING AMOUNT Ams_A FOR DIRECTIONAL CONTROL VALVE BASED ON TARGET ACTUATOR SUPPLY FLOW RATE Qact_A AND FORE-AND-AFT DIFFERENTIAL PRESSURE ΔPms

S515 — OUTPUT COMMAND SIGNAL ACCORDING TO TARGET OPENING AMOUNT Ams_A TO SOLENOID PROPORTIONAL VALVE FOR DIRECTIONAL CONTROL VALVE

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3056254 B
- JP 3594680 B
- JP 2018003516 A
- US 2019323527 A1
- US 2002108486 A1
- US 2020040547 A1
- US 2017016460 A1
- JP H08219121 A
- WO 2017110167 A1
- WO 2019220872 A1
- JP 2016075302 A
- JP 2014074433 A
- JP HO7158604 A